# DEMANDE DE BREVET EUROPEEN

(11) **EP 4 576 463 A1**
(43) Date de publication de la demande: **25.06.2025**
(21) Numéro de dépôt: 24221506.9
(22) Date de dépôt: 19.12.2024
(51) Int. Cl.: H02G 15/007, E06B 9/72, H02G 3/08, H02G 3/18, H02G 3/06

(54) **DISPOSITIF D'ALIMENTATION EN ÉNERGIE ÉLECTRIQUE, DISPOSITIF D'ENTRAÎNEMENT MOTORISÉ COMPRENANT UN TEL DISPOSITIF D'ALIMENTATION EN ÉNERGIE ÉLECTRIQUE, ET DISPOSITIF D'OCCULTATION ASSOCIÉ**

(30) Priorité: 20.12.2023 FR 2314625
(71) Demandeur: Somfy Activites SA, 74300 Cluses (FR)
(72) Inventeur: THUMEREL, Stéphane, 74300 CLUSES (FR); COSTANTINI, Guillaume, 74300 CLUSES (FR)
(74) Mandataire: Lavoix

(57) **Abrégé**

Un dispositif d'alimentation en énergie électrique (31) comprend un boîtier (48), un câble (18) et un serre-câble (49). Le serre-câble (49) comprend un premier orifice (51) de passage du câble (18). Le boîtier (48) comprend un deuxième orifice (52) de passage du câble (18). Dans une position plaquée du serre-câble (49) contre le boîtier (48), dans laquelle une vis de fixation (50) est vissée, un premier centre géométrique (C51) du premier orifice (51) est décalé par rapport à un deuxième centre géométrique (C52) du deuxième orifice (52), de sorte que le câble (18) est maintenu en position par coincement. En outre, dans une position basculée du serre-câble (49) par rapport au boîtier (48), dans laquelle la vis de fixation (50) est au moins partiellement dévissée, le câble (18) est libéré par rapport au serre-câble (49) et au boîtier (48), de sorte à pouvoir coulisser le câble (18) au travers des orifices (51, 52).

## Description

La présente invention concerne un dispositif d'alimentation en énergie électrique.

La présente invention concerne également un dispositif d'entraînement motorisé comprenant un tel dispositif d'alimentation en énergie électrique, ainsi qu'un dispositif d'occultation comprenant un tel dispositif d'entraînement motorisé.

De manière générale, la présente invention concerne le domaine des dispositifs d'occultation comprenant un dispositif d'entraînement motorisé mettant en mouvement un écran, entre au moins une première position et au moins une deuxième position.

Un dispositif d'entraînement motorisé comprend un actionneur électromécanique d'un élément mobile de fermeture, d'occultation ou de protection solaire, tel qu'un volet, une porte, une grille, un store ou tout autre matériel équivalent, appelé par la suite écran.

On connaît déjà le document EP 3 588 772 A1 qui décrit un dispositif d'alimentation en énergie électrique. Le dispositif d'alimentation en énergie électrique comprend un boîtier, un câble d'alimentation électrique et un serre-câble. Le serre-câble coopère avec le câble d'alimentation électrique. Le serre-câble est solidaire du boîtier. Ici, le serre-câble est fixé à un dispositif de connexion électrique, au moyen de deux vis de fixation vissées respectivement dans un fût de vissage du dispositif de connexion électrique. Et le dispositif de connexion électrique est fixé à un support du boîtier, au moyen de deux autres vis de fixation vissées respectivement dans un fût de vissage du boîtier. Le câble d'alimentation électrique relie électriquement le dispositif d'alimentation en énergie électrique, au moyen du dispositif de connexion électrique, à un actionneur électromécanique. Ce dispositif d'alimentation en énergie électrique donne globalement satisfaction.

Cependant, ce dispositif d'alimentation en énergie électrique présente l'inconvénient qu'une longueur du câble d'alimentation électrique entre le support du boîtier et l'actionneur électromécanique n'est pas réglable au moyen du serre-câble, puisque des fils électriques du câble d'alimentation électrique sont bloqués par une languette et les vis de fixation du serre-câble, sans pouvoir permettre un coulissement du câble d'alimentation électrique au travers du serre-câble lors du raccordement électrique des fils électriques du câble d'alimentation électrique au dispositif de connexion électrique ménagé dans le support du boîtier.

On connaît également les documents DE 27 53 486 A1 et DE 22 59 667 A1 qui décrivent respectivement un dispositif d'alimentation en énergie électrique comprenant un support, un câble d'alimentation électrique et un serre-câble. Le serre-câble coopère avec le câble d'alimentation électrique. Le serre-câble est solidaire du support, au moyen d'une vis de fixation. Le serre-câble comprend un orifice de passage du câble d'alimentation électrique. Le boîtier comprend un trou pour loger une partie du serre-câble.

La présente invention a pour but de résoudre les inconvénients précités et de proposer un dispositif d'alimentation en énergie électrique, un dispositif d'entraînement motorisé comprenant un tel dispositif d'alimentation en énergie électrique, ainsi qu'un dispositif d'occultation comprenant un tel dispositif d'entraînement motorisé, permettant de régler une longueur d'un câble d'alimentation électrique de part et d'autre d'un serre-câble, puis de maintenir en position le câble d'alimentation électrique par rapport à un boîtier.

A cet égard, la présente invention vise, selon un premier aspect, un dispositif d'alimentation en énergie électrique,
le dispositif d'alimentation en énergie électrique comprenant au moins :
- un boîtier,
- un câble d'alimentation électrique, et
- un serre-câble, le serre-câble coopérant avec le câble d'alimentation électrique, le serre-câble étant solidaire du boîtier, au moyen d'une première vis de fixation.

Le serre-câble comprend au moins un premier orifice de passage du câble d'alimentation électrique, le premier orifice présentant un premier centre géométrique. Le boîtier comprend au moins un deuxième orifice de passage du câble d'alimentation électrique, le deuxième orifice présentant un deuxième centre géométrique.

Selon l'invention, dans une position plaquée du serre-câble contre le boîtier, dans laquelle la première vis de fixation est vissée pour maintenir en appui le serre-câble contre le boîtier, le premier centre géométrique du premier orifice est décalé par rapport au deuxième centre géométrique du deuxième orifice, selon une direction axiale passant par les premier et deuxième centres géométriques, de sorte que le câble d'alimentation électrique est maintenu en position par coincement au moyen d'au moins une partie d'une première surface périphérique du premier orifice de passage et d'au moins une partie d'une deuxième surface périphérique du deuxième orifice de passage. En outre, dans une position basculée du serre-câble par rapport au boîtier, dans laquelle la première vis de fixation est au moins partiellement dévissée, le câble d'alimentation électrique est libéré par rapport au serre-câble et au boîtier, de sorte à pouvoir coulisser le câble d'alimentation électrique au travers des premier et deuxième orifices.

Ainsi, la construction du dispositif d'alimentation en énergie électrique permet de régler une longueur du câble d'alimentation électrique de part et d'autre du serre-câble, puis de maintenir en position, autrement dit de bloquer, le câble d'alimentation électrique par rapport au boîtier.

De cette manière, les opérations de réglage et de maintien en position du câble d'alimentation électrique par rapport au boîtier peuvent être mises en oeuvre par un installateur lors d'une mise en service du dispositif d'alimentation en énergie électrique.

En outre, l'opération de réglage du câble d'alimentation électrique par rapport au boîtier est mise en oeuvre sans avoir à intervenir à l'intérieur du boîtier, de sorte à éviter un risque d'endommagement d'un ou plusieurs organes internes au boîtier.

Par ailleurs, le coincement du câble d'alimentation électrique au moyen des premier et deuxième orifices permet de régler la longueur du câble d'alimentation électrique de manière souhaitée de chaque côté du serre-câble, sans être limité par un dispositif d'indexation du câble d'alimentation électrique par rapport au serre-câble.

Le maintien en position du câble d'alimentation électrique dans la position plaquée du serre-câble contre le boîtier, obtenu par le vissage de la première vis de fixation, permet ainsi de garantir une fixation robuste.

Le décalage des premier et deuxième orifices participe, d'une part, au coincement du câble d'alimentation électrique dans la position plaquée du serre-câble contre le boîtier et, d'autre part, au coulissement du câble d'alimentation électrique au travers des premier et deuxième orifices dans la position basculée du serre-câble par rapport au boîtier.

Dans la position plaquée du serre-câble par rapport au boîtier, le coincement du câble d'alimentation électrique entre le serre câble et le boîtier est garanti par ladite au moins une partie des première et deuxième surfaces des premier et deuxième orifices.

Dans la position basculée du serre-câble par rapport au boîtier, le décalage des premier et deuxième orifices permet d'éviter de serrer le câble d'alimentation électrique sur une longueur de celui-ci importante et, par conséquent, de générer une contrainte importante sur le serre câble.

La position basculée du serre-câble par rapport au boîtier est une position où le serre-câble est maintenu par rapport au boîtier, sans que le serre-câble soit plaqué contre le boîtier.

La position basculée du serre-câble par rapport au boîtier est une position de réglage de la longueur du câble d'alimentation électrique de part et d'autre du serre-câble. Le réglage de la longueur du câble d'alimentation électrique de part et d'autre du serre-câble est mis en oeuvre en exerçant une traction sur le câble d'alimentation électrique, dans une première direction par rapport au boîtier ou dans une deuxième direction par rapport au boîtier, la deuxième direction étant opposée à la première direction.

Lorsque la première vis de fixation est au moins partiellement dévissée, le serre-câble peut être écarté du boîtier de la position plaquée à la position basculée.

De cette manière, le câble d'alimentation électrique est libéré du coincement provoqué par les premier et deuxième orifices dans la position plaquée.

Lorsque la première vis de fixation est vissée, le serre-câble est rapproché du boîtier de la position basculée jusqu'à la position plaquée, de sorte à pincer le câble d'alimentation électrique jusqu'à le coincer au moyen des premier et deuxième orifices.

Par ailleurs, la construction du dispositif d'alimentation en énergie électrique permet de garantir, lors de l'opération de réglage, d'exercer sur le câble d'alimentation électrique un effort de traction qui est inférieur ou égal à une première valeur seuil prédéterminée d'effort. En outre, la construction du dispositif d'alimentation en énergie électrique permet de garantir, suite à l'opération de maintien en position, que celui-ci peut résister à un effort de traction sur le câble d'alimentation électrique qui est inférieur ou égal à une deuxième valeur seuil prédéterminée d'effort.

Selon une caractéristique avantageuse de l'invention, le serre-câble comprend, en outre, un élément en saillie, l'élément en saillie s'étendant le long d'une portion de la circonférence du premier orifice. En outre, dans la position plaquée du serre-câble contre le boîtier, une partie de l'élément en saillie est disposée à l'intérieur du deuxième orifice.

Selon une autre caractéristique avantageuse de l'invention, le boîtier comprend au moins :
- un corps, et
- une première pièce d'extrémité, la première pièce d'extrémité étant assemblée sur le corps ou étant monobloc avec le corps.

Le serre-câble est assemblé sur la première pièce d'extrémité. En outre, le corps comprend au moins une cavité, la cavité logeant une partie du câble d'alimentation électrique.

Selon une autre caractéristique avantageuse de l'invention, le corps comprend, en outre, au moins un premier fût de vissage. La première pièce d'extrémité comprend au moins un premier trou de passage. Le serre-câble comprend au moins un deuxième trou de passage. En outre, la première vis de fixation est logée à l'intérieur des premiers et deuxième trous de passage et est vissée dans le premier fût de vissage, au moins dans la position plaquée du serre-câble contre le boîtier.

Selon une autre caractéristique avantageuse de l'invention, dans la position basculée du serre-câble par rapport au boîtier, la première vis de fixation est partiellement dévissée par rapport au premier fût de vissage, tout en restant vissée dans le premier fût de vissage.

Selon une autre caractéristique avantageuse de l'invention, la première pièce d'extrémité comprend au moins un ergot. Le serre-câble comprend, en outre, au moins une cavité. En outre, l'ergot est logé à l'intérieur de la cavité, dans la position plaquée du serre-câble contre le boîtier et dans la position basculée du serre-câble par rapport au boîtier.

Selon une autre caractéristique avantageuse de l'invention, la première pièce d'extrémité est fixée sur le corps du boîtier, au moyen d'une deuxième vis de fixation.

La présente invention vise, selon un deuxième aspect, un dispositif d'entraînement motorisé,
le dispositif d'entraînement motorisé comprenant au moins :
   - un actionneur électromécanique,
   - une unité électronique de contrôle, et
   - un dispositif d'alimentation en énergie électrique,
l'actionneur électromécanique comprenant au moins un moteur électrique.

Selon l'invention, le dispositif d'alimentation en énergie électrique est conforme à l'invention et tel que mentionné ci-dessus. Le dispositif d'alimentation en énergie électrique comprend, en outre, une batterie, l'unité électronique de contrôle et le moteur électrique étant alimentés en énergie électrique à partir de la batterie.

Ce dispositif d'entraînement motorisé présente des caractéristiques et avantages analogues à ceux décrits précédemment en relation avec le dispositif d'alimentation en énergie électrique selon l'invention.

Selon une autre caractéristique avantageuse de l'invention, le dispositif d'alimentation en énergie électrique comprend, en outre, au moins un panneau photovoltaïque, le panneau photovoltaïque étant fixé sur le boîtier, la batterie étant alimentée en énergie électrique au moyen du panneau photovoltaïque.

La présente invention vise, selon un troisième aspect, un dispositif d'occultation, le dispositif d'occultation comprenant au moins :
- un écran, et
- un dispositif d'entraînement motorisé.

Selon l'invention, le dispositif d'entraînement motorisé est conforme à l'invention et tel que mentionné ci-dessus, l'écran étant configuré pour être entraîné en déplacement par l'actionneur électromécanique du dispositif d'entraînement motorisé.

D'autres particularités et avantages de l'invention apparaîtront encore dans la description ci-après, faite en référence aux dessins annexés, donnés à titre d'exemples non limitatifs et dans lesquels :
[Fig 1] la figure 1 est une vue schématique en coupe transversale d'une installation d'occultation conforme à un mode de réalisation de l'invention ;
[Fig 2] la figure 2 est une vue schématique en perspective de l'installation d'occultation illustrée à la figure 1 ;
[Fig 3] la figure 3 est une vue schématique en perspective d'un dispositif d'entraînement motorisé de l'installation d'occultation illustrée aux figures 1 et 2, ce dispositif d'entraînement motorisé comprenant un actionneur électromécanique conforme à l'invention et un tube d'enroulement ;
[Fig 4] la figure 4 est une vue schématique en coupe du dispositif d'entraînement motorisé illustré à la figure 3, selon un plan de coupe passant par un axe de rotation d'un arbre de sortie de l'actionneur électromécanique, cette vue schématique en coupe étant interrompue localement ;
[Fig 5] la figure 5 est une vue schématique d'un dispositif d'alimentation en énergie électrique de l'installation d'occultation illustrée aux figures 1 et 2, où un capot a été ôté ;
[Fig 6] la figure 6 est une première vue schématique en coupe et partielle du dispositif d'alimentation en énergie électrique illustré à la figure 5, où un serre-câble est dans une position plaquée contre un boîtier ;
[Fig 7] la figure 7 est une deuxième vue schématique en coupe et partielle du dispositif d'alimentation en énergie électrique, analogue à la figure 6, où le serre-câble est dans une position basculée par rapport au boîtier ;
[Fig 8] la figure 8 est une vue schématique en coupe et partielle du dispositif d'alimentation en énergie électrique illustré à la figure 6, représentant le serre-câble et un câble d'alimentation électrique ;
[Fig 9] la figure 9 est une vue schématique en perspective du serre-câble illustré aux figures 6 à 8 ;
[Fig 10] la figure 10 est une vue schématique de côté et à plus grande échelle d'une partie du dispositif d'alimentation en énergie électrique dans la position plaquée du serre-câble contre le boîtier illustrée à la figure 6, où le capot, qui a été retiré à la figure 5, est représenté ; et
[Fig 11] la figure 11 est une vue schématique en coupe et à plus grande échelle d'une partie du dispositif d'alimentation en énergie électrique dans la position basculée du serre-câble contre le boîtier illustrée à la figure 7.

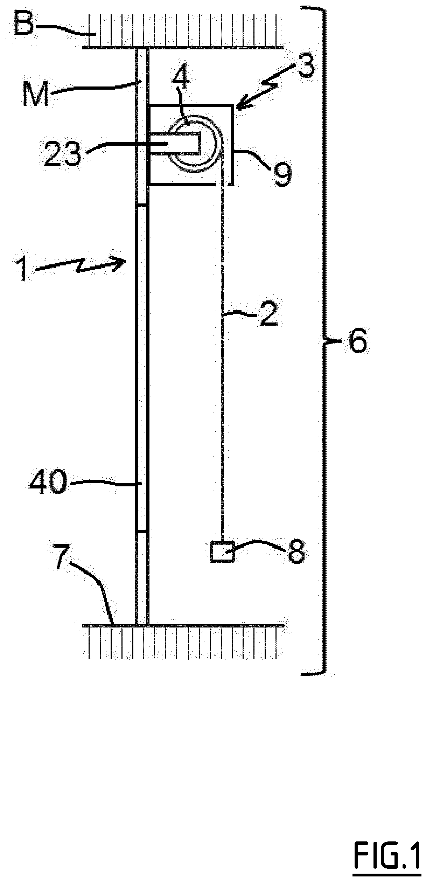

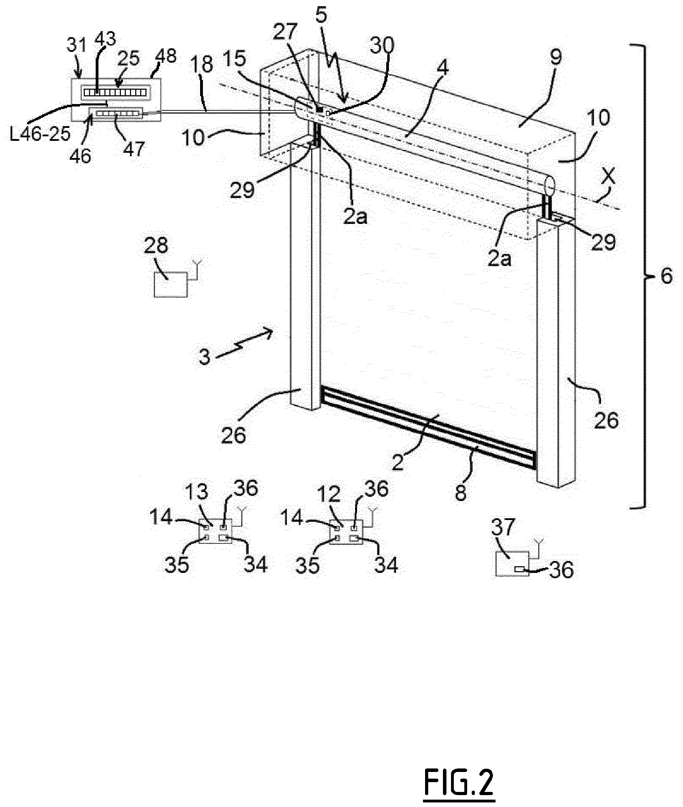

On décrit tout d'abord, en référence aux figures 1 et 2, une installation d'occultation 6 conforme à un mode de réalisation de l'invention. Cette installation d'occultation 6 comprend au moins un dispositif d'occultation 3. Cette installation d'occultation 6, installée dans un bâtiment B, comporte au moins une ouverture 1, dans laquelle est disposée une fenêtre 40 ou une porte, non représentée. Cette installation d'occultation 6 est équipée d'un écran 2 appartenant au dispositif d'occultation 3, en particulier un store motorisé. L'écran 2 est configuré pour se déplacer, autrement dit se déplace, en vis-à-vis de la fenêtre 40 ou de la porte.

Une installation de fermeture et une installation de protection solaire sont des exemples d'installations d'occultation. De même, un dispositif de fermeture et un dispositif de protection solaire sont des exemples de dispositifs d'occultation.

L'installation de fermeture, d'occultation ou de protection solaire est par la suite appelée « installation d'occultation » 6.

Le dispositif de fermeture, d'occultation ou de protection solaire est par la suite appelé « dispositif d'occultation » 3. Le dispositif d'occultation 3 comprend l'écran 2.

Le dispositif d'occultation 3 peut être un store, notamment un store comprenant une toile enroulable, une toile plissée ou alvéolée, ou des lames pouvant être orientables, un volet roulant ou un volet battant. La présente invention s'applique à tous les types de dispositif d'occultation 3, pouvant être disposés soit à l'intérieur du bâtiment B, soit à l'extérieur du bâtiment B, soit avec une première partie des dispositifs d'occultation 3 disposée à l'intérieur du bâtiment B et avec une deuxième partie des dispositifs d'occultation 3 disposée à l'extérieur du bâtiment B.

Ici, l'installation d'occultation 6 comprend le dispositif d'occultation 3.

On décrit, en référence aux figures 1 et 2, un store motorisé enroulable qui forme un dispositif d'occultation 3.

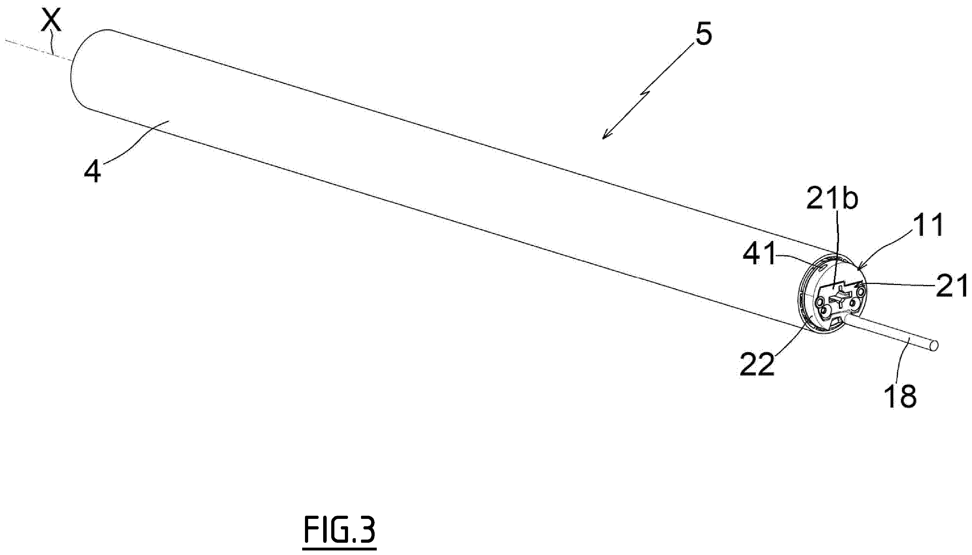

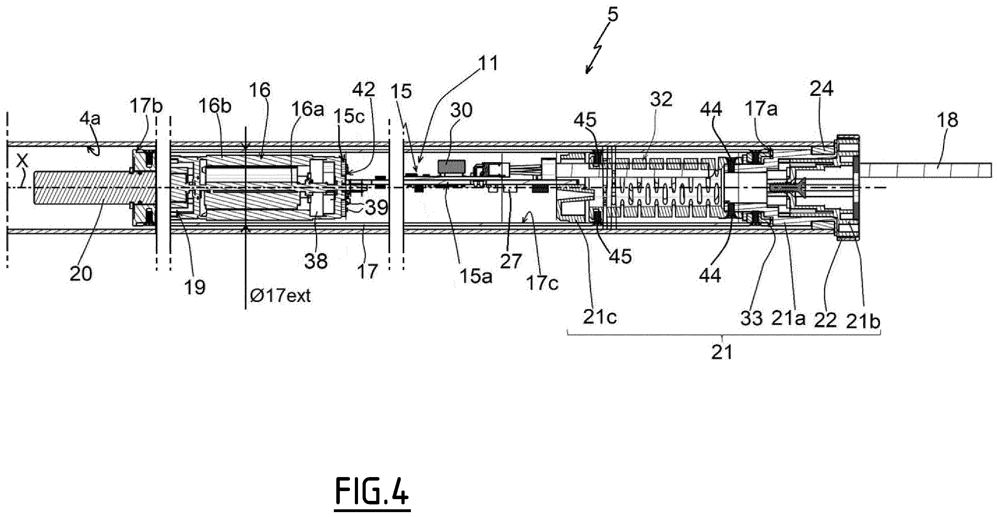

Avantageusement, le dispositif d'occultation 3 comprend un dispositif d'entraînement motorisé 5. Le dispositif d'entraînement motorisé 5 comprend un actionneur électromécanique 11 illustré aux figures 3 et 4.

L'écran 2 est configuré pour être déplacé, autrement dit est déplacé, au moyen du dispositif d'entraînement motorisé 5 et, plus particulièrement, de l'actionneur électromécanique 11.

Ici, le dispositif d'entraînement motorisé 5 et, par conséquent, le dispositif d'occultation 3 comprend, en outre, un tube d'enroulement 4. En outre, le tube d'enroulement 4 est agencé de sorte à être entraîné en rotation, autrement dit est entraîné en rotation, par l'actionneur électromécanique 11.

Ici, l'écran 2 est enroulable sur le tube d'enroulement 4.

Ainsi, l'écran 2 du dispositif d'occultation 3 est enroulé sur le tube d'enroulement 4 ou déroulé autour de celui-ci, le tube d'enroulement 4 étant entraîné par le dispositif d'entraînement motorisé 5, en particulier par l'actionneur électromécanique 11.

De cette manière, l'écran 2 est mobile entre une position enroulée, en particulier haute, et une position déroulée, en particulier basse, et inversement.

L'écran 2 du dispositif d'occultation 3 est un écran de fermeture, d'occultation et/ou de protection solaire, s'enroulant et se déroulant autour du tube d'enroulement 4.

Avantageusement, le dispositif d'occultation 3 comprend un dispositif de maintien 9, 23.

Avantageusement, le dispositif de maintien 9, 23 peut comprendre deux supports 23. Un support 23 est disposé à chaque extrémité du tube d'enroulement 4, en particulier dans une configuration assemblée du dispositif d'occultation 3.

Ainsi, le tube d'enroulement 4 est maintenu par l'intermédiaire des supports 23. Un seul des supports 23 est visible à la figure 1 et ceux-ci ne sont pas représentés à la figure 2. Les supports 23 permettent de lier mécaniquement le dispositif d'occultation 3 à la structure du bâtiment B, notamment à un mur M du bâtiment B.

Avantageusement, le dispositif de maintien 9, 23 peut comprendre un caisson 9. En outre, le tube d'enroulement 4 et au moins une partie de l'écran 2 sont logés à l'intérieur du caisson 9, en particulier dans la configuration assemblée du dispositif d'occultation 3.

De manière générale, le caisson 9 est disposé au-dessus de l'ouverture 1, ou encore en partie supérieure de l'ouverture 1.

Ici et comme illustré à la figure 1, les supports 23 sont également logés à l'intérieur du caisson 9.

Avantageusement, le caisson 9 comprend deux joues 10, telles qu'illustrées à la figure 2. Une joue 10 est disposée à chaque extrémité du caisson 9, en particulier dans la configuration assemblée du dispositif d'occultation 3.

En variante, représentée à la figure 2, le tube d'enroulement 4 est maintenu par l'intermédiaire du caisson 9, en particulier par l'intermédiaire des joues 10 du caisson 9, sans utiliser des supports, tels que les supports 23 mentionnés ci-dessus.

Avantageusement, le dispositif d'occultation 3 peut également comprendre deux coulisses latérales 26, comme illustré uniquement à la figure 2. Chaque coulisse latérale 26 comprend une gorge 29. Chaque gorge 29 de l'une des coulisses latérales 26 coopère, autrement dit est configurée pour coopérer, avec un bord latéral 2a de l'écran 2, en particulier dans la configuration assemblée du dispositif d'occultation 3, de sorte à guider l'écran 2, lors de l'enroulement et du déroulement de l'écran 2 autour du tube d'enroulement 4.

L'actionneur électromécanique 11 est, par exemple, de type tubulaire. Celui-ci permet de mettre en rotation le tube d'enroulement 4 autour d'un axe de rotation X, de sorte à déplacer, en particulier dérouler ou enrouler, l'écran 2 du dispositif d'occultation 3.

Dans un état monté du dispositif d'occultation 3, l'actionneur électromécanique 11 est inséré dans le tube d'enroulement 4.

Avantageusement, le dispositif d'occultation 3 comprend, en outre, une barre de charge 8 pour exercer une tension sur l'écran 2.

Le store enroulable, qui forme le dispositif d'occultation 3, comporte une toile, formant l'écran 2 du store enroulable 3. Une première extrémité de l'écran 2, en particulier l'extrémité supérieure de l'écran 2, dans la configuration assemblée du dispositif d'occultation 3, est fixée au tube d'enroulement 4. En outre, une deuxième extrémité de l'écran 2, en particulier l'extrémité inférieure de l'écran 2, dans la configuration assemblée du dispositif d'occultation 3, est fixée à la barre de charge 8.

Ici, la toile formant l'écran 2 est réalisée à partir d'un matériau textile.

Dans un exemple de réalisation, non représenté, la première extrémité de l'écran 2 présente un ourlet au travers duquel est disposée une tige, en particulier en matière plastique. Cet ourlet réalisé au niveau de la première extrémité de l'écran 2 est obtenu au moyen d'une couture de la toile formant l'écran 2. Lors de l'assemblage de l'écran 2 sur le tube d'enroulement 4, l'ourlet et la tige situés au niveau de la première extrémité de l'écran 2 sont insérés par coulissement dans une rainure ménagée sur la face externe du tube d'enroulement 4, en particulier sur toute la longueur du tube d'enroulement 4, de sorte à solidariser l'écran 2 avec le tube d'enroulement 4 et à pouvoir enrouler et dérouler l'écran 2 autour du tube d'enroulement 4.

Le mode de fixation de l'écran 2 sur le tube d'enroulement 4 n'est pas limitatif et peut être différent. Il peut être mis en oeuvre, par exemple, au moyen d'un adhésif ou d'une ou plusieurs articulations fixées, notamment par vissage ou par rivetage, au tube d'enroulement 4.

Quel que soit le mode de réalisation, la première extrémité de l'écran 2 est disposée au niveau du dispositif de maintien 9, 23.

Dans le cas d'un store enroulable, la position haute enroulée correspond à une position de fin de course haute prédéterminée, ou encore à la mise en appui de la barre de charge 8 de l'écran 2 contre un bord du caisson 9 du store enroulable 3, et la position basse déroulée correspond à une position de fin de course basse prédéterminée, ou à la mise en appui de la barre de charge 8 de l'écran 2 contre un seuil 7 de l'ouverture 1, ou encore au déroulement complet de l'écran 2.

Avantageusement, le dispositif d'entraînement motorisé 5 est commandé par une unité de commande. L'unité de commande peut être, par exemple, une unité de commande locale 12 ou une unité de commande centrale 13.

Avantageusement, l'unité de commande locale 12 peut être reliée, en liaison filaire ou non filaire, avec l'unité de commande centrale 13.

Avantageusement, l'unité de commande centrale 13 peut piloter l'unité de commande locale 12, ainsi que d'autres unités de commande locales similaires et réparties dans le bâtiment B.

Le dispositif d'entraînement motorisé 5 est, de préférence, configuré pour exécuter les commandes de déplacement, notamment de déroulement ou d'enroulement, de l'écran 2 du dispositif d'occultation 3, pouvant être émises, notamment, par l'unité de commande locale 12 ou l'unité de commande centrale 13.

L'installation d'occultation 6 comprend soit l'unité de commande locale 12, soit l'unité de commande centrale 13, soit l'unité de commande locale 12 et l'unité de commande centrale 13.

On décrit à présent, plus en détail et en référence aux figures 2 à 4, le dispositif d'entraînement motorisé 5, y compris l'actionneur électromécanique 11, appartenant à l'installation d'occultation 6 et, plus particulièrement, au dispositif d'occultation 3 illustré aux figures 1 et 2.

Avantageusement, l'actionneur électromécanique 11 comprend un moteur électrique 16.

Avantageusement, le moteur électrique 16 comprend un rotor 16a et un stator 16b, positionnés de manière coaxiale autour de l'axe de rotation X, qui est également l'axe de rotation du tube d'enroulement 4 en configuration montée du dispositif d'entraînement motorisé 5.

Avantageusement, le moteur électrique 16 peut être de type sans balais à commutation électronique, appelé également « BLDC » (acronyme du terme anglo-saxon BrushLess Direct Current) ou « synchrone à aimants permanents », ou de type à courant continu.

Des moyens de commande de l'actionneur électromécanique 11, permettant le déplacement de l'écran 2 du dispositif d'occultation 3, sont constitués par au moins une unité électronique de contrôle 15. Cette unité électronique de contrôle 15 appartient au dispositif d'entraînement motorisé 5 et, avantageusement, à l'actionneur électromécanique 11 et est apte à mettre en fonctionnement le moteur électrique 16 de l'actionneur électromécanique 11 et, en particulier, à permettre l'alimentation en énergie électrique du moteur électrique 16.

Ainsi, l'unité électronique de contrôle 15 commande, notamment, le moteur électrique 16, de sorte à ouvrir ou fermer l'écran 2, comme décrit précédemment.

Les moyens de commande de l'actionneur électromécanique 11 comprennent des moyens matériels et/ou logiciels.

A titre d'exemple nullement limitatif, les moyens matériels peuvent comprendre au moins un microcontrôleur 30.

Avantageusement, l'unité électronique de contrôle 15 comprend, en outre, un premier module de communication 27, en particulier de réception d'ordres de commande, les ordres de commande étant émis par un émetteur d'ordres, tel que l'unité de commande locale 12 ou l'unité de commande centrale 13, ces ordres étant destinés à commander le dispositif d'entraînement motorisé 5.

Avantageusement, le premier module de communication 27 de l'unité électronique de contrôle 15 est de type sans fil. En particulier, le premier module de communication 27 est configuré pour recevoir des ordres de commande radioélectriques.

Avantageusement, le premier module de communication 27 peut également permettre la réception d'ordres de commande transmis par des moyens filaires.

Avantageusement, l'unité électronique de contrôle 15, l'unité de commande locale 12 et/ou l'unité de commande centrale 13 peuvent être en communication avec une station météorologique, non représentée, disposée à l'intérieur du bâtiment B ou déportée à l'extérieur du bâtiment B, incluant, notamment, un ou plusieurs capteurs pouvant être configurés pour déterminer, par exemple, une température, une luminosité, ou encore une vitesse de vent, dans le cas où la station météorologique est déportée à l'extérieur du bâtiment B.

Avantageusement, l'unité électronique de contrôle 15, l'unité de commande locale 12 et/ou l'unité de commande centrale 13 peuvent également être en communication avec un serveur 28, tel qu'illustré à la figure 2, de sorte à contrôler l'actionneur électromécanique 11 suivant des données mises à disposition à distance par l'intermédiaire d'un réseau de communication, en particulier un réseau internet pouvant être relié au serveur 28.

L'unité électronique de contrôle 15 peut être commandée à partir de l'unité de commande locale 12 et/ou de l'unité de commande centrale 13. L'unité de commande locale 12 et/ou l'unité de commande centrale 13 est pourvue d'un clavier de commande. Le clavier de commande de l'unité de commande locale 12 ou de l'unité de commande centrale 13 comprend un ou plusieurs éléments de sélection 14 et, éventuellement, un ou plusieurs éléments d'affichage 34.

A titre d'exemples nullement limitatifs, les éléments de sélection peuvent être des boutons poussoirs et/ou des touches sensitives. Les éléments d'affichage peuvent être des diodes électroluminescentes et/ou un afficheur, par exemple LCD (acronyme du terme anglo-saxon « Liquid Crystal Display ») ou TFT (acronyme du terme anglo-saxon « Thin Film Transistor »). Les éléments de sélection et d'affichage peuvent être également réalisés au moyen d'un écran tactile.

Avantageusement, l'unité de commande locale 12 et/ou l'unité de commande centrale 13 comprend au moins un deuxième module de communication 36.

Ainsi, le deuxième module de communication 36 de l'unité de commande locale 12 ou de l'unité de commande centrale 13 est configuré pour émettre, autrement dit émet, des ordres de commande, en particulier par des moyens sans fil, par exemple radioélectriques, et/ou par des moyens filaires.

En outre, le deuxième module de communication 36 de l'unité de commande locale 12 ou de l'unité de commande centrale 13 peut également être configuré pour recevoir, autrement dit reçoit, des ordres de commande, en particulier par l'intermédiaire des mêmes moyens.

Avantageusement, le deuxième module de communication 36 de l'unité de commande locale 12 ou de l'unité de commande centrale 13 est configuré pour communiquer, autrement dit communique, avec le premier module de communication 27 de l'unité électronique de contrôle 15.

Ainsi, le deuxième module de communication 36 de l'unité de commande locale 12 ou de l'unité de commande centrale 13 échange des ordres de commande avec le premier module de communication 27 de l'unité électronique de contrôle 15, soit de manière monodirectionnelle, soit de manière bidirectionnelle.

Avantageusement, l'unité de commande locale 12 est un point de commande, pouvant être fixe ou nomade. Un point de commande fixe peut être un boîtier de commande destiné à être fixé sur une façade du mur M du bâtiment B ou sur une face d'un cadre dormant de la fenêtre 40 ou de la porte. Un point de commande nomade peut être une télécommande, un téléphone intelligent ou une tablette.

Avantageusement, l'unité de commande locale 12 et/ou l'unité de commande centrale 13 comprend, en outre, un contrôleur 35.

Le dispositif d'entraînement motorisé 5, en particulier l'unité électronique de contrôle 15, est, de préférence, configuré pour exécuter des ordres de commande de déplacement, notamment de fermeture ainsi que d'ouverture, de l'écran 2 du dispositif d'occultation 3. Ces ordres de commande peuvent être émis, notamment, par l'unité de commande locale 12 ou par l'unité de commande centrale 13.

Le dispositif d'entraînement motorisé 5 peut être contrôlé par l'utilisateur, par exemple par la réception d'un ordre de commande correspondant à un appui sur le ou l'un des éléments de sélection 14 de l'unité de commande locale 12 ou de l'unité de commande centrale 13.

Avantageusement, l'installation d'occultation 6 comprend, en outre, au moins un capteur 37.

Avantageusement, le capteur 37 comprend au moins un deuxième module de communication 36, tel que celui décrit en référence à l'unité de commande locale 12 ou à l'unité de commande centrale 13. En outre, le deuxième module de communication 36 du capteur 37 est configuré pour communiquer, autrement dit communique, avec le premier module de communication 27 de l'unité électronique de contrôle 15.

Avantageusement, le capteur 37 peut être, par exemple, un capteur d'éclairement, un capteur de température, un capteur d'humidité ou un capteur de vent.

Ainsi, le dispositif d'entraînement motorisé 5 peut également être contrôlé automatiquement par la réception d'un ordre de commande correspondant à au moins un signal provenant du capteur 37.

En complément ou en variante, le dispositif d'entraînement motorisé 5 peut également être contrôlé automatiquement par la réception d'un ordre de commande correspondant à au moins un signal provenant d'une horloge, non représentée, de l'unité électronique de contrôle 15, en particulier du microcontrôleur 30.

En complément ou en variante, le capteur 37 et/ou l'horloge peuvent être intégrés à l'unité de commande locale 12 ou à l'unité de commande centrale 13.

Avantageusement, l'actionneur électromécanique 11 comprend, en outre, un carter 17, en particulier tubulaire. En outre, le moteur électrique 16 est monté à l'intérieur du carter 17, en particulier dans une configuration assemblée de l'actionneur électromécanique 11.

Ici, le carter 17 est creux. Le carter 17 comprend une première extrémité 17a et une deuxième extrémité 17b. La deuxième extrémité 17b est opposée à la première extrémité 17a.

Avantageusement, l'actionneur électromécanique 11 comprend, en outre, une couronne 24, autrement dit un manchon.

La couronne 24 est disposée, autrement dit est configurée pour être disposée, au voisinage de la première extrémité 17a du carter 17, en particulier dans la configuration assemblée de l'actionneur électromécanique 11.

La couronne 24 forme, autrement dit est configurée pour former ou constituer, un palier de guidage en rotation du tube d'enroulement 4, autour du carter 17 de l'actionneur électromécanique 11, en particulier dans une configuration assemblée du dispositif d'entraînement motorisé 5 et, par conséquent, du dispositif d'occultation 3.

Ici, le carter 17 de l'actionneur électromécanique 11 est de forme cylindrique, notamment de révolution autour de l'axe de rotation X, et est ouvert à chacune de ses extrémités 17a, 17b.

Avantageusement, le carter 17 est un tube présentant une section circulaire.

Ici, le carter 17 est réalisé dans un matériau métallique.

En variante, le carter 17 est réalisé dans une matière plastique.

Avantageusement, l'actionneur électromécanique 11 comprend, en outre, un arbre de sortie 20.

Ici, l'arbre de sortie 20 est disposé, autrement dit est configuré pour être disposé, au voisinage de la deuxième extrémité 17b du carter 17, en particulier dans la configuration assemblée de l'actionneur électromécanique 11.

Avantageusement, l'actionneur électromécanique 11 comprend, en outre, un réducteur 19.

Avantageusement, le réducteur 19 comprend au moins un étage de réduction. L'étage de réduction peut être un train d'engrenages de type épicycloïdal.

Le type et le nombre d'étages de réduction du réducteur ne sont pas limitatifs. Le nombre d'étages de réduction peut être, notamment, égal à un ou supérieur ou égal à deux.

Le réducteur 19 est représenté partiellement à la figure 4, du fait de l'interruption locale de cette figure.

Le réducteur 19 est accouplé, autrement dit est configuré pour être accouplé, avec le moteur électrique 16, en particulier avec le rotor 16a du moteur électrique 16 dans la configuration assemblée de l'actionneur électromécanique 11.

Avantageusement, l'actionneur électromécanique 11 comprend, en outre, un frein, non représenté.

A titre d'exemples nullement limitatifs, le frein peut être un frein à ressort, un frein à came, un frein magnétique ou un frein électromagnétique.

Le frein est configuré pour freiner et/ou pour bloquer en rotation l'arbre de sortie 20, de sorte à réguler la vitesse de rotation du tube d'enroulement 4, lors d'un déplacement de l'écran 2, et à maintenir bloqué le tube d'enroulement 4, lorsque l'actionneur électromécanique 11 est désactivé électriquement.

Ici, le frein est configuré pour être disposé, autrement dit est disposé, dans la configuration assemblée de l'actionneur électromécanique 11, entre deux étages de réduction du réducteur 19.

En variante, non représentée, le frein est configuré pour être disposé, autrement dit est disposé, dans la configuration assemblée de l'actionneur électromécanique 11, entre l'unité électronique de contrôle 15 et le moteur électrique 16, autrement dit à l'entrée du moteur électrique 16, ou entre le réducteur 19 et l'arbre de sortie 20, autrement dit à la sortie du réducteur 19, ou encore entre le moteur électrique 16 et le réducteur 19, c'est-à-dire à la sortie du moteur électrique 16.

Avantageusement, le réducteur 19 et, éventuellement, le frein sont montés, autrement dit sont configurés pour être montés, à l'intérieur du carter 17 de l'actionneur électromécanique 11, en particulier dans la configuration assemblée de l'actionneur électromécanique 11.

Avantageusement, l'actionneur électromécanique 11 et, plus particulièrement, l'unité électronique de contrôle 15 comprend, en outre, un dispositif de détection de fin de course et/ou d'obstacle, non représenté, lors du déplacement de l'écran 2. Ce dispositif de détection de fin de course et/ou d'obstacle peut être mécanique ou électronique.

Avantageusement, le dispositif de détection de fin de course et/ou d'obstacle est mis en oeuvre au moyen du microcontrôleur 30 de l'unité électronique de contrôle 15 et, en particulier, au moyen d'un algorithme mis en oeuvre par ce microcontrôleur 30.

Le tube d'enroulement 4 est entraîné en rotation autour de l'axe de rotation X et du carter 17 de l'actionneur électromécanique 11 en étant soutenu par l'intermédiaire de deux liaisons pivot. La première liaison pivot est réalisée au niveau d'une première extrémité du tube d'enroulement 4 au moyen de la couronne 24. La couronne 24 permet ainsi de réaliser un palier. La deuxième liaison pivot, non représentée, est réalisée au niveau d'une deuxième extrémité du tube d'enroulement 4, opposée à la première extrémité.

Avantageusement, l'actionneur électromécanique 11 comprend, en outre, un support de couple 21.

Ici, le support de couple 21 est disposé au niveau de la première extrémité 17a du carter 17 de l'actionneur électromécanique 11, en particulier dans la configuration assemblée de l'actionneur électromécanique 11.

Le support de couple 21 permet de reprendre les efforts exercés par l'actionneur électromécanique 11, en particulier le couple exercé par l'actionneur électromécanique 11, par rapport à la structure du bâtiment B. Le support de couple 21 permet avantageusement de reprendre, en outre, des efforts exercés par le tube d'enroulement 4, notamment le poids du tube d'enroulement 4, de l'actionneur électromécanique 11 et de l'écran 2, et d'assurer la reprise de ces efforts par la structure du bâtiment B.

Ainsi, le support de couple 21 permet de fixer l'actionneur électromécanique 11 sur le dispositif de maintien 9, 23, en particulier à l'un des supports 23 ou sur l'une des joues 10 du caisson 9.

Avantageusement, le support de couple 21 est en saillie au niveau de la première extrémité 17a du carter 17 de l'actionneur électromécanique 11.

Avantageusement, le support de couple 21 obture, autrement dit est configuré pour obturer, la première extrémité 17a du carter 17, en particulier dans la configuration assemblée de l'actionneur électromécanique 11.

Avantageusement, le support de couple 21 est fixé, autrement dit est configuré pour être fixé, au carter 17 au moyen d'un ou plusieurs éléments de fixation, non représentés, en particulier dans la configuration assemblée de l'actionneur électromécanique 11. Le ou les éléments de fixation peuvent être, notamment, des bossages, des vis de fixation, des éléments de fixation par encliquetage élastique, des rainures emmanchées dans des échancrures ou une combinaison de ces différents éléments de fixation.

Avantageusement, le support de couple 21 comprend une première partie 21a, pouvant également être appelée « point fixe », et une deuxième partie 21b, pouvant également être appelée « tête d'actionneur ».

La première partie 21a du support de couple 21 est assemblée, autrement dit est configurée pour être assemblée, avec le carter 17, en particulier dans la configuration assemblée de l'actionneur électromécanique 11. En outre, la deuxième partie 21b du support de couple 21 est configurée pour être assemblée, autrement dit est assemblée, avec le dispositif de maintien 9, 23, en particulier dans une configuration assemblée de l'actionneur électromécanique 11 dans le dispositif d'occultation 3.

La deuxième partie 21b du support de couple 21 est assemblée, autrement dit est configurée pour être assemblée, sur la première partie 21a du support de couple 21, en particulier dans la configuration assemblée de l'actionneur électromécanique 11.

Dans un autre exemple de réalisation, le support de couple 21 peut être monobloc, autrement dit constitué d'une seule pièce formant les première et deuxième parties 21a, 21b du support de couple 21.

Avantageusement, la deuxième partie 21b du support de couple 21 peut présenter différentes formes extérieures, notamment une forme cannelée, dite « en étoile », autrement dit comprenant des reliefs sur son contour, ou une forme ronde, autrement dit dépourvue de reliefs sur son contour, comme illustrée aux figures 3 et 4.

Avantageusement, au moins une portion de la première partie 21a du support de couple 21 est de forme générale cylindrique et est disposée, autrement dit est configurée pour être disposée, à l'intérieur du carter 17, en particulier dans la configuration assemblée de l'actionneur électromécanique 11.

Avantageusement, un diamètre extérieur d'au moins une portion de la deuxième partie 21b du support de couple 21 est égal ou, éventuellement, supérieur au diamètre extérieur QJ17ext du carter 17.

Avantageusement, le support de couple 21 comprend, en outre, une butée 33. En outre, la butée 33 est en appui, autrement dit est configurée pour être en appui, contre le carter 17, au niveau de la première extrémité 17a du carter 17, en particulier dans la configuration assemblée de l'actionneur électromécanique 11.

Ainsi, la butée 33 du support de couple 21 permet de limiter l'enfoncement de la première partie 21a du support de couple 21 dans le carter 17, suivant la direction de l'axe de rotation X.

Ici, la butée 33 du support de couple 21 comprend un épaulement. Plus particulièrement, elle est réalisée sous la forme d'une collerette, en particulier de forme cylindrique et à génératrice rectiligne.

En variante, non représentée, la butée 33 du support de couple 21 peut délimiter les première et deuxième parties 21a, 21b du support de couple 21 l'une par rapport à l'autre.

Ainsi, seule la première partie 21a du support de couple 21 est disposée à l'intérieur du carter 17 de l'actionneur électromécanique 11, suite à l'emmanchement du support de couple 21 à l'intérieur du carter 17, jusqu'à la butée 33, en particulier dans la configuration assemblée de l'actionneur électromécanique 11.

Ici et comme illustré à la figure 4, la couronne 24 est disposée, autrement dit est configurée pour être disposée, autour du support de couple 21, en particulier de la première partie 21a du support de couple 21, notamment dans la configuration assemblée de l'actionneur électromécanique 11. Dans ce cas, la couronne 24 est montée libre en rotation autour du support de couple 21, en particulier de la première partie 21a du support de couple 21.

En variante, non représentée, la couronne 24 est disposée, autrement dit est configurée pour être disposée, autour d'une partie du carter 17, en particulier dans la configuration assemblée de l'actionneur électromécanique 11. Dans ce cas, la couronne 24 est montée libre en rotation autour du carter 17.

Dans une autre variante, non représentée, la couronne 24 est disposée, autrement dit est configurée pour être disposée, d'une part, autour du support de couple 21 et, d'autre part, autour d'une partie du carter 17 de l'actionneur électromécanique 11, en particulier de la première extrémité 17a du carter 17, notamment dans la configuration assemblée de l'actionneur électromécanique 11. Dans un tel cas, la couronne 24 peut être montée libre en rotation, d'une part, autour du support de couple 21 et, d'autre part, autour du carter 17 de l'actionneur électromécanique 11.

Avantageusement, l'unité électronique de contrôle 15 peut être alimentée en énergie électrique au moyen d'un câble d'alimentation électrique 18.

Avantageusement, l'unité électronique de contrôle 15 est disposée au moins en partie à l'intérieur du carter 17 de l'actionneur électromécanique 11.

Par ailleurs, l'unité électronique de contrôle 15 peut être disposée au moins en partie à l'extérieur du carter 17 de l'actionneur électromécanique 11 et, en particulier, montée dans le support de couple 21.

Avantageusement, l'unité électronique de contrôle 15 comprend une première carte électronique 15a et une deuxième carte électronique, non représentée.

Ici, la première carte électronique 15a de l'unité électronique de contrôle 15 est disposée à l'intérieur du carter 17 de l'actionneur électromécanique 11, en particulier dans la configuration assemblée de l'actionneur électromécanique 11. En outre, la deuxième carte électronique est disposée à l'intérieur du support de couple 21 de l'actionneur électromécanique 11, en particulier dans la configuration assemblée de l'actionneur électromécanique 11.

Ici, l'unité électronique de contrôle 15 est dépourvue d'un boîtier de réception de la première carte électronique 15a. En d'autres termes, la première carte électronique 15a n'est pas montée dans un boîtier spécifique. Cette première carte électronique 15a est, d'une part, maintenue, notamment enfichée, dans le support de couple 21, en particulier dans une troisième partie centrale 21c du support de couple 21, comme illustré à la figure 4, et, d'autre part, maintenue, notamment enfichée, dans un support, non représenté, monté en extrémité du moteur électrique 16, en particulier dans la configuration assemblée de l'actionneur électromécanique 11.

Avantageusement, l'actionneur électromécanique 11 comprend, en outre, un module de filtration des vibrations 32.

Ici, le module de filtration des vibrations 32 est intégré au support de couple 21 et, plus particulièrement, est disposé, le long de l'axe de rotation X, entre les première et troisième parties 21a, 21c du support de couple 21.

Ici et comme illustré à la figure 4, le module de filtration des vibrations 32 est, d'une part, assemblé sur le support de couple 21 et, plus particulièrement, fixé sur le support de couple 21, notamment par vissage, au moyen de vis de fixation 44, et, d'autre part, fixé au carter 17 de l'actionneur électromécanique 11, notamment par vissage, au moyen de vis de fixation 45.

En variante, non représentée, le module de filtration des vibrations 32 est distinct du support de couple 21.

Avantageusement, le support de couple 21 comprend, en outre, un couvercle 22. Le couvercle 22 est monté, autrement dit est configuré pour être monté, sur le support de couple 21, notamment sur les première et/ou deuxième parties 21a, 21b du support de couple 21, en particulier dans la configuration assemblée de l'actionneur électromécanique 11.

Avantageusement, le support de couple 21 comprend au moins un logement, non représenté.

Ici, la deuxième carte électronique est disposée, autrement dit est configurée pour être disposée, à l'intérieur du logement formé entre les première et deuxième parties 21a, 21b du support de couple 21 et le couvercle 22, en particulier dans la configuration assemblée de l'actionneur électromécanique 11.

Avantageusement, le support de couple 21 comprend au moins un dispositif de sélection 41, en particulier un bouton, pouvant être, par exemple, de type poussoir ou magnétique.

Le ou chaque dispositif de sélection 41 est configuré, notamment, pour réaliser un réglage de l'actionneur électromécanique 11 au travers d'un ou plusieurs modes de configuration, pour appairer l'actionneur électromécanique 11 avec une ou plusieurs unités de commande 12, 13, pour réinitialiser un ou plusieurs paramètres, pouvant être, par exemple, une position de fin de course, pour réinitialiser la ou les unités de commande 12, 13 appairées ou encore pour commander le déplacement de l'écran 2.

Ici, le support de couple 21 comprend un seul dispositif de sélection 41.

Le nombre de dispositifs de sélection du support de couple n'est pas limitatif et peut être différent. Il peut être, notamment, supérieur ou égal à deux.

Avantageusement, le support de couple 21 comprend au moins un dispositif d'affichage, non représenté.

Le ou chaque dispositif d'affichage est configuré, notamment, pour afficher une indication visuelle, pouvant être, par exemple, représentative d'un mode de fonctionnement de l'actionneur électromécanique 11, en particulier un mode de configuration ou un mode de commande, ou encore d'un état d'un organe du dispositif d'entraînement motorisé 5.

Ici, le ou chaque dispositif de sélection 41 et le ou chaque dispositif d'affichage sont reliés électriquement, autrement dit sont configurés pour être reliés électriquement, à l'unité électronique de contrôle 15 et, plus précisément, à la deuxième carte électronique de contrôle, en particulier dans la configuration assemblée de l'actionneur électromécanique 11.

En variante, le ou chaque dispositif de sélection 41 et/ou le ou chaque dispositif d'affichage sont reliés électriquement, autrement dit sont configurés pour être reliés électriquement, à la première carte électronique de contrôle 15a, en particulier dans la configuration assemblée de l'actionneur électromécanique 11.

Ici, le support de couple 21 comprend un seul logement, où sont logés le dispositif de sélection 41 et le dispositif d'affichage.

En variante, non représentée, le support de couple 21 peut comprendre un premier logement pour recevoir le dispositif d'affichage et un deuxième logement pour recevoir le dispositif de sélection 41. Le support de couple 21 peut comprendre, en outre, un premier logement par dispositif d'affichage ou un premier logement pour une pluralité de dispositifs d'affichage, dans le cas où le support de couple 21 présente plusieurs dispositifs d'affichage, et, éventuellement, un deuxième logement par dispositif de sélection 41 ou un deuxième logement pour une pluralité de dispositifs de sélection 41, dans le cas où le support de couple 21 présente plusieurs dispositifs de sélection 41.

Avantageusement, l'arbre de sortie 20 de l'actionneur électromécanique 11 est disposé à l'intérieur du tube d'enroulement 4 et au moins en partie à l'extérieur du carter 17 de l'actionneur électromécanique 11.

Ici, une extrémité de l'arbre de sortie 20 est en saillie par rapport au carter 17 de l'actionneur électromécanique 11, en particulier par rapport à la deuxième extrémité 17b du carter 17.

Avantageusement, le dispositif d'entraînement motorisé 5 comprend, en outre, un élément de liaison, non représenté. L'arbre de sortie 20 de l'actionneur électromécanique 11 est configuré pour entraîner en rotation, autrement dit entraîne en rotation, l'élément de liaison, autour de l'axe de rotation X. En outre, l'élément de liaison est configuré pour entraîner en rotation, autrement dit entraîne en rotation, le tube d'enroulement 4, autour de l'axe de rotation X.

Avantageusement, l'élément de liaison est relié, autrement dit est configuré pour être relié, au tube d'enroulement 4, en particulier dans la configuration assemblée du dispositif d'entraînement motorisé 5.

Ici, l'élément de liaison est réalisé sous la forme d'une roue de transmission de couple.

Lors de la mise en fonctionnement de l'actionneur électromécanique 11, le moteur électrique 16 et le réducteur 19 entraînent en rotation l'arbre de sortie 20. En outre, l'arbre de sortie 20 entraîne en rotation le tube d'enroulement 4 par l'intermédiaire de l'élément de liaison.

Ainsi, le tube d'enroulement 4 entraîne en rotation l'écran 2 du dispositif d'occultation 3, de sorte à ouvrir ou fermer l'ouverture 1.

Avantageusement, l'actionneur électromécanique 11 comprend, en outre, un dispositif de comptage 42. Le dispositif de comptage 42 est configuré pour coopérer, autrement dit coopère, avec l'unité électronique de contrôle 15. En outre, le dispositif de comptage 42 et l'unité électronique de contrôle 15 sont configurés pour déterminer une position, pouvant être appelée « courante », de l'écran 2.

Avantageusement, l'unité électronique de contrôle 15 est configurée pour surveiller au moins un signal provenant du dispositif de comptage 42 à une fréquence prédéterminée, notamment en fonction de la position de l'écran 2.

Ici, le dispositif de comptage 42 est de type magnétique.

Dans un tel cas, le dispositif de comptage 42 peut comprendre une roue codeuse 38 et un ou plusieurs capteurs 39, en particulier à effet Hall.

Ici, la roue codeuse 38 est reliée à une extrémité axiale du rotor 16a du moteur électrique 16. En outre, le ou chaque capteur 39 est assemblé sur une carte électronique de l'unité électronique de contrôle 15, en particulier sur une troisième carte électronique 15c, ou, en variante, sur la première carte électronique 15a.

Ainsi, le dispositif de comptage 42 permet de déterminer le nombre de tours réalisés par le rotor 16a du moteur électrique 16.

Ici, le dispositif de comptage 42 comprend trois capteurs 39, dont seuls deux sont visibles à la figure 4.

Le nombre de capteurs n'est pas limitatif et peut être différent. Il peut être, par exemple, de un ou de deux.

En variante, non représentée, le dispositif de comptage 42 peut être dépourvu de capteurs 39. Dans ce cas, le dispositif de comptage 42 est configuré pour, en coopération avec l'unité électronique de contrôle 15, analyser les signaux de commande d'alimentation en énergie électrique du moteur électrique 16 et déterminer une position, pouvant être appelée « courante », du rotor 16a du moteur électrique 16 et, par conséquent, de l'arbre de sortie 20 de l'actionneur électromécanique 11 et du tube d'enroulement 4.

En variante, non représentée, le dispositif de comptage 42 permet de déterminer le nombre de tours réalisés par l'arbre de sortie 20 de l'actionneur électromécanique 11.

Dans une autre variante ou en complément, la couronne 24 comprend, sur sa face intérieure, une denture, non représentée, configurée pour coopérer, autrement dit coopérant, avec un pignon, non représenté, installé à l'intérieur du support de couple 21 ou, alternativement, à l'intérieur du carter 17 de l'actionneur électromécanique 11. Dans cette variante, la roue codeuse 38 est reliée au pignon, en particulier au moyen d'un arbre. Ainsi, la denture de la couronne 24 est configurée pour entraîner en rotation, autrement dit entraîne en rotation, le pignon, de sorte à compter le nombre de tours du tube d'enroulement 4. Dans ce cas, la denture de la couronne 24 et le pignon font partie du dispositif de comptage 42.

Le dispositif de comptage 42 permet également de déterminer le sens de rotation du tube d'enroulement 4 et/ou de gérer les positions de fin de course de l'écran 2.

Le type du dispositif de comptage n'est pas limitatif et peut être différent, en particulier optique, par exemple un encodeur équipé d'un ou plusieurs capteurs optiques, ou temporel.

Le dispositif d'occultation 3 et, plus particulièrement, le dispositif d'entraînement motorisé 5 comprend, en outre, un dispositif d'alimentation en énergie électrique 31, visible à la figure 2.

Le dispositif d'alimentation en énergie électrique 31 est relié électriquement à une charge électrique, en l'occurrence l'actionneur électromécanique 11, au moyen du câble d'alimentation électrique 18.

Ainsi, le dispositif d'alimentation en énergie électrique 31 est configuré pour alimenter, autrement dit alimente, en énergie électrique l'actionneur électromécanique 11 et, plus particulièrement, l'unité électronique de contrôle 15 et le moteur électrique 16.

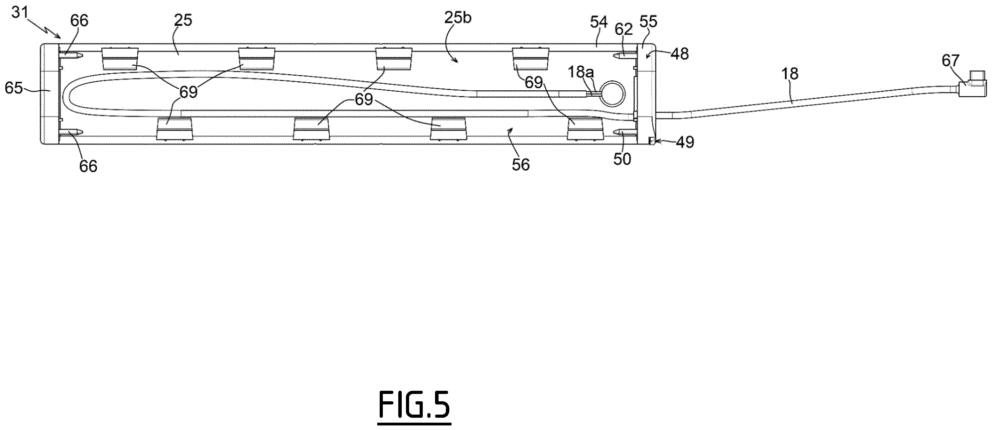

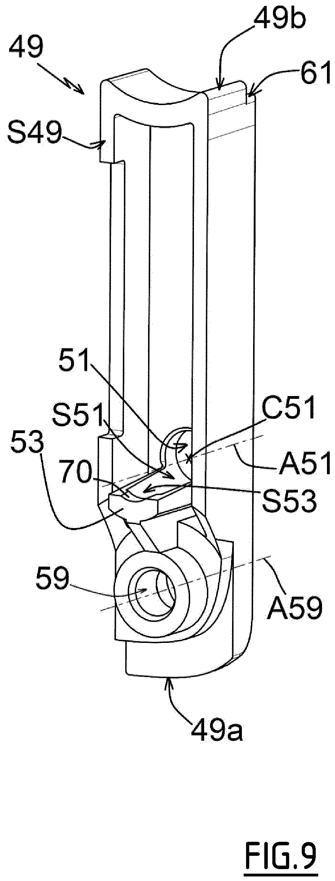

Le dispositif d'alimentation en énergie électrique 31 comprend un boîtier 48, le câble d'alimentation électrique 18 et un serre-câble 49, tel qu'illustré aux figures 5 à 11. Le serre-câble 49 coopère, autrement dit est configuré pour coopérer, avec le câble d'alimentation électrique 18. Le serre-câble 49 est solidaire du boîtier 48, au moyen d'une première vis de fixation 50.

Avantageusement, le dispositif d'alimentation en énergie électrique 31 comprend, en outre, au moins une batterie 46. La batterie 46 est configurée pour alimenter, autrement dit alimente, en énergie électrique l'actionneur électromécanique 11, en particulier l'unité électronique de contrôle 15 et le moteur électrique 16.

A la figure 2, la batterie 46 est disposée dans le boîtier 48. Dans ce cas, la batterie 46 est à l'extérieur du caisson 9, étant donné que le dispositif d'alimentation en énergie électrique 31 est à l'extérieur du caisson 9.

En variante, non représentée, la batterie 46 peut être disposée au niveau du caisson 9, en particulier à l'intérieur du caisson 9, à l'intérieur du tube d'enroulement 4 tout en étant à l'extérieur du carter 17 de l'actionneur électromécanique 11, ou à l'intérieur du carter 17 de l'actionneur électromécanique 11, en particulier dans la configuration assemblée de l'actionneur électromécanique 11. Dans ce dernier cas, l'actionneur électromécanique 11 comprend la batterie 46.

Avantageusement, la batterie 46 est de type rechargeable.

Avantageusement, le dispositif d'alimentation en énergie électrique 31 comprend, en outre, au moins un panneau photovoltaïque 25. Le panneau photovoltaïque 25 est configuré pour alimenter, autrement dit alimente, en énergie électrique la batterie 46, en particulier dans le cas où celle-ci est de type rechargeable.

Ainsi, le rechargement de la batterie 46 est mis en oeuvre par énergie solaire, au moyen du panneau photovoltaïque 25.

De cette manière, le dispositif d'alimentation en énergie électrique 31 permet d'alimenter en énergie électrique l'actionneur électromécanique 11 et, plus particulièrement, l'unité électronique de contrôle 15 et le moteur électrique 16 au moyen de la batterie 46 et du panneau photovoltaïque 25, sans que l'actionneur électromécanique 11 soit relié électriquement à un réseau d'alimentation électrique du secteur.

A la figure 2, le câble d'alimentation électrique 18 relie électriquement le dispositif d'alimentation en énergie électrique 31, en particulier la batterie 46, à l'unité électronique de contrôle 15, pouvant être disposée soit à l'intérieur soit à l'extérieur du carter 17 de l'actionneur électromécanique 11. Le panneau photovoltaïque 25 est relié électriquement à la batterie 46, par une liaison électrique L46-25, étant donné que la batterie 46 est disposée à l'intérieur du boîtier 48 du dispositif d'alimentation en énergie électrique 31. Le câble d'alimentation électrique 18 permet l'alimentation en énergie électrique de l'actionneur électromécanique 11, notamment l'alimentation en énergie électrique de l'unité électronique de contrôle 15 et du moteur électrique 16.

En variante, telle qu'illustré aux figures 5 à 7, le câble d'alimentation électrique 18 relie électriquement le panneau photovoltaïque 25 à l'actionneur électromécanique 11, en particulier à l'unité électronique de contrôle 15, dans le cas où la batterie 46 est disposée à l'extérieur du boîtier 48 du dispositif d'alimentation en énergie électrique 31 et, éventuellement, à l'intérieur du carter 17 de l'actionneur électromécanique 11. Dans ce cas, une liaison électrique, non représentée, est mise en oeuvre entre l'unité électronique de contrôle 15 et la batterie 46.

En variante, non représentée, le câble d'alimentation électrique 18 relie électriquement le panneau photovoltaïque 25 à la batterie 46, dans le cas où la batterie 46 est disposée à l'extérieur du boîtier 48 du dispositif d'alimentation en énergie électrique 31, ainsi qu'à l'extérieur du carter 17 de l'actionneur électromécanique 11.

En variante, non représentée, le câble d'alimentation électrique 18 relie électriquement le panneau photovoltaïque 25 à l'unité électronique de contrôle 15 et à la batterie 46, dans le cas où la batterie 46 est disposée à l'extérieur du boîtier 48 du dispositif d'alimentation en énergie électrique 31, ainsi qu'à l'extérieur du carter 17 de l'actionneur électromécanique 11. Dans ce cas, le câble d'alimentation électrique 18 présente plusieurs branches, notamment au nombre de trois et pouvant être, par exemple, en forme de « Y ».

Avantageusement, le câble d'alimentation électrique 18 comprend au moins un connecteur électrique 67. En outre, le connecteur électrique 67 ou l'un des connecteurs électriques 67 coopère, autrement dit est configuré pour coopérer, avec un autre connecteur électrique, non représenté, de l'actionneur électromécanique 11, de la batterie 46 ou de l'unité électronique de contrôle 15, en particulier dans la configuration assemblée du dispositif d'entraînement motorisé 5.

Avantageusement, lorsque le support de couple 21 comprend un dispositif d'affichage, le paramètre de fonctionnement que ce dispositif d'affichage permet de visualiser est un état de charge de la batterie 46.

Avantageusement, la batterie 46 comprend une pluralité d'éléments de stockage d'énergie 47, en particulier reliés électriquement en série. Les éléments de stockage d'énergie 47 de la batterie 46 peuvent être, notamment, des accumulateurs rechargeables.

Avantageusement, le panneau photovoltaïque 25 comprend une pluralité de cellules photovoltaïques 43. Dans ce cas, la batterie 46 est alimentée en énergie électrique au moyen des cellules photovoltaïques 43 du panneau photovoltaïque 25.

Le dispositif d'entraînement motorisé 5, en particulier le panneau photovoltaïque 25 et/ou l'unité électronique de contrôle 15, comprend des éléments de chargement configurés pour charger la batterie 46, à partir de l'énergie solaire récupérée par le panneau photovoltaïque 25. Dans ce cas, le courant circule entre les composants 25, 46 et 15 à travers une liaison filaire, au moins en partie au moyen du câble d'alimentation électrique 18.

Ainsi, les éléments de chargement configurés pour charger la batterie 46, à partir de l'énergie solaire, permettent de convertir l'énergie solaire récupérée par le panneau photovoltaïque 25 en énergie électrique.

En variante ou en complément, le dispositif d'entraînement motorisé 5, en particulier l'actionneur électromécanique 11, est alimenté en énergie électrique à partir de la batterie 46, à partir d'une batterie auxiliaire, non représentée, ou à partir d'un réseau d'alimentation électrique du secteur, en particulier par le réseau alternatif commercial, notamment en fonction d'un état de charge de la batterie 46.

Dans le cas où l'unité électronique de contrôle 15 comprend la première carte électronique 15a et la deuxième carte électronique, non représentée, la première carte électronique 15a est configurée pour contrôler, autrement dit contrôle, le moteur électrique 16 et la deuxième carte électronique est configurée pour permettre la recharge de la batterie 46 et/ou accéder à des fonctions de paramétrage et/ou de configuration de l'actionneur électromécanique 11, au moyen du ou des dispositifs de sélection 41 et, éventuellement, du ou des dispositifs d'affichage. Les éléments de chargement de la batterie 46 peuvent être disposés au niveau de la deuxième carte électronique.

En variante, dans le cas où l'unité électronique de contrôle 15 comprend une seule carte électronique, la seule carte électronique est configurée pour contrôler le moteur électrique 16, pour permettre la recharge de la batterie 46 et, éventuellement, accéder à des fonctions de paramétrage et/ou de configuration de l'actionneur électromécanique 11, au moyen du ou des dispositifs de sélection et, éventuellement, du ou des dispositifs d'affichage. Les éléments de chargement de la batterie 46 peuvent être disposés au niveau de la carte électronique.

Avantageusement, le panneau photovoltaïque 25 est fixé sur le boîtier 48 du dispositif d'alimentation en énergie électrique 31.

La fixation du panneau photovoltaïque 25 sur le boîtier 48 n'est pas limitative et peut être mise en oeuvre, par exemple, par collage, soit au moyen d'un adhésif, soit au moyen d'une couche de colle, par encliquetage élastique ou par emboîtement.

Avantageusement, le boîtier 48 du dispositif d'alimentation en énergie électrique 31 est fixé sur une paroi, pouvant être, par exemple, une paroi du caisson 9, le mur M du bâtiment B, l'une des coulisses latérales 26, une vitre de la fenêtre 40 ou un cadre dormant de la fenêtre 40.

La fixation du boîtier 48 sur une paroi n'est pas limitative et peut être mise en oeuvre, par exemple, par collage, soit au moyen d'un adhésif, soit au moyen d'une couche de colle, par encliquetage élastique, par emboîtement, par vissage ou par rivetage.

On décrit à présent plus en détails, en référence aux figures 5 à 11, le dispositif d'alimentation en énergie électrique 31, illustré à la figure 2.

Le serre-câble 49 comprend au moins un premier orifice 51 de passage du câble d'alimentation électrique 18. Ici, le premier orifice 51 est de section circulaire. En outre, le premier orifice 51 présente un premier axe central A51, qui passe par son centre géométrique C51.

Le boîtier 48 comprend au moins un deuxième orifice 52 de passage du câble d'alimentation électrique 18. Ici, le deuxième orifice 52 est de section circulaire. En outre, le deuxième orifice 52 présente un deuxième axe central A52, qui passe par son centre géométrique C52.

Dans une position plaquée du serre-câble 49 contre le boîtier 48, telle qu'illustré aux figures 5, 6 et 10, dans laquelle la première vis de fixation 50 est vissée pour maintenir en appui le serre-câble 49 contre le boîtier 48, le premier centre géométrique C51 du premier orifice 51 est décalé par rapport au deuxième centre géométrique C52 du deuxième orifice 52, selon une direction axiale D passant par les premier et deuxième centres géométriques C51, C52, de sorte que le câble d'alimentation électrique 18 est maintenu en position par coincement au moyen d'au moins une partie d'une première surface périphérique S51 du premier orifice de passage 51 et d'au moins une partie d'une deuxième surface périphérique S52 du deuxième orifice de passage 52.

Dans la position plaquée du serre-câble 49 contre le boîtier 48, le premier axe central A51 et le deuxième axe central A52 sont parallèles et décalés l'un par rapport à l'autre, selon la direction axiale D.

On note Δ51-52 le décalage entre les premier et deuxième centres géométriques C51, C52, selon la direction axiale D, dans la position plaquée du serre-câble 49 contre le boîtier 48.

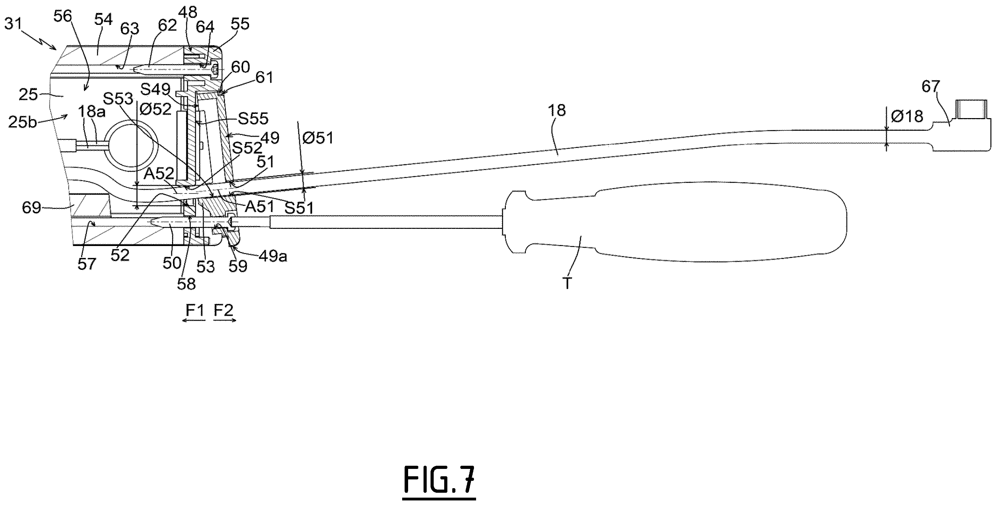

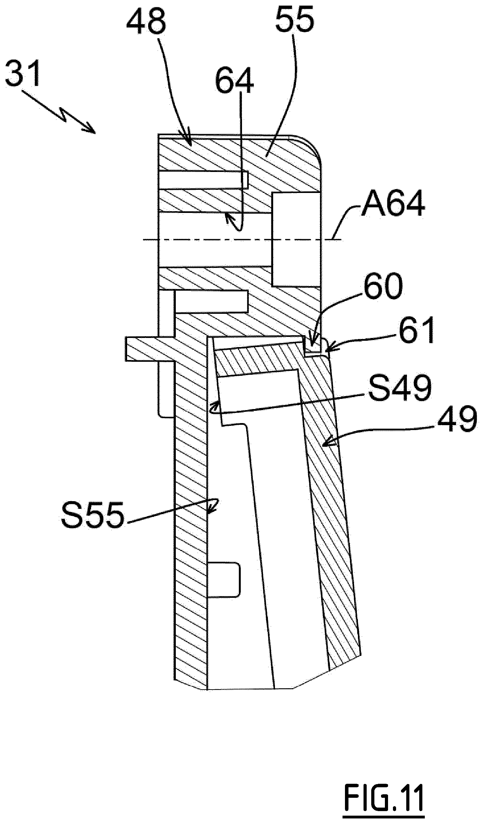

En outre, dans une position basculée du serre-câble 49 par rapport au boîtier 48, telle qu'illustrée aux figures 7 et 11, dans laquelle la première vis de fixation 50 est au moins partiellement dévissée, le câble d'alimentation électrique 18 est libéré par rapport au serre-câble 49 et au boîtier 48, de sorte à pouvoir coulisser le câble d'alimentation électrique 18 au travers des premier et deuxième orifices 51, 52.

Ainsi, la construction du dispositif d'alimentation en énergie électrique 31 permet de régler une longueur du câble d'alimentation électrique 18 de part et d'autre du serre-câble 49, puis de maintenir en position, autrement dit de bloquer, le câble d'alimentation électrique 18 par rapport au boîtier 48.

De cette manière, les opérations de réglage et de maintien en position du câble d'alimentation électrique 18 par rapport au boîtier 48 peuvent être mises en oeuvre par un installateur lors d'une mise en service du dispositif d'alimentation en énergie électrique 31.

En outre, l'opération de réglage du câble d'alimentation électrique 18 par rapport au boîtier 48 est mise en oeuvre sans avoir à intervenir à l'intérieur du boîtier 48, de sorte à éviter un risque d'endommagement d'un ou plusieurs organes internes au boîtier 48.

Par ailleurs, le coincement du câble d'alimentation électrique 18 au moyen des premier et deuxième orifices 51, 52 permet de régler la longueur du câble d'alimentation électrique 18 de manière souhaitée de chaque côté du serre-câble 49, sans être limité par un dispositif d'indexation du câble d'alimentation électrique 18 par rapport au serre-câble 49.

Le maintien en position du câble d'alimentation électrique 18 dans la position plaquée du serre-câble 49 contre le boîtier 48, obtenu par le vissage de la première vis de fixation 50, permet ainsi de garantir une fixation robuste.

Le décalage des premier et deuxième axes centraux A51, A52 des premier et deuxième orifices 51, 52 participe, d'une part, au coincement du câble d'alimentation électrique 18 dans la position plaquée du serre-câble 49 contre le boîtier 48 et, d'autre part, au coulissement du câble d'alimentation électrique 18 au travers des premier et deuxième orifices 51, 52 dans la position basculée du serre-câble 49 par rapport au boîtier 48.

Dans la position plaquée du serre-câble 49 par rapport au boîtier 48, le coincement du câble d'alimentation électrique 18 entre le serre câble 49 et le boîtier 48 est garanti par ladite au moins une partie des première et deuxième surfaces S51, S52 des premier et deuxième orifices 51, 52.

De cette manière, dans la position plaquée du serre-câble 49 par rapport au boîtier 48, le câble d'alimentation électrique 18 est coincé par ladite au moins une partie de la première surface périphérique S51 du premier orifice de passage 51 et par ladite au moins une partie de la deuxième surface périphérique S52 du deuxième orifice de passage 52, étant donné que les premier et deuxième centres géométriques C51, C52 des premier et deuxième orifices 51, 52 sont décalés, selon la direction axiale D passant par les premier et deuxième centres géométriques C51, C52.

Dans la position basculée du serre-câble 49 par rapport au boîtier 48, le décalage des premier et deuxième orifices 51, 52 permet d'éviter de serrer le câble d'alimentation électrique 18 sur une longueur importante de celui-ci et, par conséquent, de générer une contrainte importante sur le serre câble 49.

La position basculée du serre-câble 49 par rapport au boîtier 48 est une position où le serre-câble 49 est maintenu par rapport au boîtier 48, sans que le serre-câble 49 soit plaqué contre le boîtier 48.

La position basculée du serre-câble 49 par rapport au boîtier 48 est une position de réglage de la longueur du câble d'alimentation électrique 18 de part et d'autre du serre-câble 49. Le réglage de la longueur du câble d'alimentation électrique 18 de part et d'autre du serre-câble 49 est mis en oeuvre en exerçant une traction sur le câble d'alimentation électrique 18, dans une première direction F1 par rapport au boîtier 48 ou dans une deuxième direction F2 par rapport au boîtier 48, la deuxième direction F2 étant opposée à la première direction F1.

De cette manière, dans la position basculée du serre-câble 49 par rapport au boîtier 48, le câble d'alimentation électrique 18 est libéré, de sorte à pouvoir coulisser à l'intérieur des premier et deuxième orifices 51, 52, en particulier en pouvant utiliser la totalité de l'évidement défini par les première et deuxième surfaces S51, S52 des premier et deuxième orifices 51, 52.

Lorsque la première vis de fixation 50 est au moins partiellement dévissée, le serre-câble 49 peut être écarté du boîtier 48 de la position plaquée à la position basculée.

De cette manière, le câble d'alimentation électrique 18 est libéré du coincement provoqué par les premier et deuxième orifices 51, 52 dans la position plaquée.

Lorsque la première vis de fixation 50 est vissée, le serre-câble 49 est rapproché du boîtier 48 de la position basculée jusqu'à la position plaquée, de sorte à pincer le câble d'alimentation électrique 18 jusqu'à le coincer au moyen des premier et deuxième orifices 51, 52.

Par ailleurs, la construction du dispositif d'alimentation en énergie électrique 31 permet de garantir, lors de l'opération de réglage, d'exercer sur le câble d'alimentation électrique 18 un effort de traction qui est inférieur ou égal à une première valeur seuil prédéterminée d'effort. En outre, la construction du dispositif d'alimentation en énergie électrique 31 permet de garantir, suite à l'opération de maintien en position, que celui-ci peut résister à un effort de traction sur le câble d'alimentation électrique 18 qui est inférieur ou égal à une deuxième valeur seuil prédéterminée d'effort.

Avantageusement, la deuxième valeur seuil prédéterminée d'effort est strictement supérieure à la première valeur seuil prédéterminée d'effort.

A titre d'exemple nullement limitatif, la première valeur seuil prédéterminée d'effort est de l'ordre de dix Newtons et la deuxième valeur seuil prédéterminée d'effort est de l'ordre de trente-cinq Newtons.

Le réglage de la longueur du câble d'alimentation électrique 18 entre l'actionneur électromécanique 11 et le boîtier 48 permet également de prendre en considération l'orientation du boîtier 48 et, plus particulièrement, du panneau photovoltaïque 25, notamment horizontale ou verticale par rapport au sol, dans le cas où celui-ci est fixé sur le boîtier 48.

Avantageusement, dans le cas où le panneau photovoltaïque 25 est fixé sur le boîtier 48, le câble d'alimentation électrique 18 est inséré au travers du premier orifice 51 du serre-câble 49 et du deuxième orifice 52 du boîtier 48 avant que celui-ci soit relié électriquement au panneau photovoltaïque 25.

Avantageusement, dans le cas où le panneau photovoltaïque 25 est fixé sur le boîtier 48, la liaison électrique entre le câble d'alimentation électrique 18 et le panneau photovoltaïque 25 est mise en oeuvre par le soudage de fils électriques 18a du câble d'alimentation électrique 18 avec des pistes électriques, non représentées, du panneau photovoltaïque 25.

Avantageusement, le panneau photovoltaïque 25 comprend une face avant 25a et une face arrière 25b. La face arrière 25b est opposée à la face avant 25a.

Ici, le panneau photovoltaïque 25 est fixé, autrement dit est configuré pour être fixé, sur le boîtier 48 au moyen d'éléments de fixation 69, en particulier dans la configuration assemblée du dispositif d'alimentation en énergie électrique 31.

Ici, les éléments de fixation 69 sont des éléments de fixation par encliquetage élastique, en particulier au nombre de huit.

Le nombre et le type des éléments de fixation du panneau photovoltaïque sur le boîtier ne sont pas limitatifs et peuvent être différents. Le nombre d'éléments de fixation peut être supérieur ou égal à deux et le type des éléments de fixation peut être, par exemple, par vissage, par collage, par emboîtement.

Avantageusement, suite à l'opération de réglage du câble d'alimentation électrique 18 par rapport au boîtier 48, une partie du câble d'alimentation électrique 18 est disposée le long de la face arrière 25b du panneau photovoltaïque 25, comme visible aux figures 5 à 7.

Ici, le premier orifice 51 présente une première valeur d'un diamètre intérieur 051. En outre, le deuxième orifice 52 présente une deuxième valeur d'un diamètre intérieur 052.

Avantageusement, la première valeur de diamètre intérieur QJ51 du premier orifice 51 est égale à la deuxième valeur de diamètre intérieur QJ52 du deuxième orifice 52.

Ici, le câble d'alimentation électrique 18 est de section circulaire.

Avantageusement, le câble d'alimentation électrique 18 présente une troisième valeur d'un diamètre extérieur 018. La troisième valeur de diamètre extérieur QJ18 du câble d'alimentation électrique 18 est inférieure ou égale à la première valeur de diamètre intérieur QJ51 du premier orifice 51 et à la deuxième valeur de diamètre intérieur QJ52 du deuxième orifice 52.

Ainsi, le maintien en position du câble d'alimentation électrique 18 dans la position plaquée, obtenu par le décalage des premier et deuxième centres géométriques C51, C52 des premier et deuxième orifices 51, 52, selon la direction axiale D, est compatible avec la troisième valeur de diamètre extérieur QJ18 du câble d'alimentation électrique 18 comprise dans une plage de valeurs définie par une valeur minimale et par une valeur maximale.

A titre d'exemple nullement limitatif, la première valeur de diamètre intérieur QJ51 du premier orifice 51 est de l'ordre de 4,4 millimètres. La deuxième valeur de diamètre intérieur QJ52 du deuxième orifice 52 est de l'ordre de 4 millimètres. En outre, la troisième valeur de diamètre extérieur QJ18 du câble d'alimentation électrique 18 est de l'ordre de 3,5 millimètres. Dans ce cas, la valeur du décalage Δ51-52 est de l'ordre de un à deux millimètres.

Avantageusement, le serre-câble 49 comprend, en outre, un élément en saillie 53. L'élément en saillie 53 s'étend le long d'une portion de la circonférence du premier orifice 51. En outre, dans la position plaquée du serre-câble 49 contre le boîtier 48, une partie de l'élément en saillie 53 est disposée à l'intérieur du deuxième orifice 52.

Ainsi, l'élément en saillie 53 du serre-câble 49 permet d'augmenter la surface de coincement du câble d'alimentation électrique 18, autrement dit la surface de pression sur le câble d'alimentation électrique 18, au moyen des premier et deuxième orifices 51, 52.

L'élément en saillie 53 peut également être appelé un élément proéminent ou une protubérance.

Ici, l'élément en saillie 53 présente une forme de languette.

Avantageusement, l'élément en saillie 53 comprend une troisième surface S53.

Ici, la troisième surface S53 présente une forme concave, en particulier de section circulaire, dont le diamètre est défini par rapport à un axe central identique au premier axe central A51 du premier orifice 51.

Avantageusement, la troisième surface S53 de l'élément en saillie 53 est le prolongement, selon la direction du premier axe central A51, d'une partie de la première surface périphérique S51 du premier orifice de passage 51.

Avantageusement, la valeur du diamètre de la forme concave de la troisième surface S53 est égale à la première valeur de diamètre intérieur QJ51 du premier orifice 51.

Dans la position plaquée du serre-câble 49 par rapport au boîtier 48, le blocage du câble d'alimentation électrique 18 entre le serre câble 49 et le boîtier 48 est garanti par la troisième surface S53 de l'élément en saillie 53 et ladite au moins une partie de la deuxième surface S52 du deuxième orifice 52.

De cette manière, dans la position plaquée du serre-câble 49 par rapport au boîtier 48, le câble d'alimentation électrique 18 est bloqué par la troisième surface S53 de l'élément en saillie 53 et par ladite au moins une partie de la deuxième surface périphérique S52 du deuxième orifice de passage 52, étant donné que l'axe central de la troisième surface 53 de l'élément en saillie 53, qui est identique au premier axe central A51 du premier orifice 51, et le deuxième axe central A52 du deuxième orifice 52 sont décalés, selon la direction axiale D passant par les premier et deuxième centres géométriques C51, C52.

Avantageusement, l'élément en saillie 53 comprend, en particulier au niveau de son extrémité libre, une excroissance 70, autrement dit une proéminence, par rapport à la troisième surface S53.

Ainsi, dans la position plaquée du serre-câble 49 par rapport au boîtier 48, l'excroissance 70 de l'élément en saillie 53 permet de retenir en position le câble d'alimentation électrique 18, à la façon d'un harpon.

Avantageusement, l'excroissance 70 présente également une forme concave, en particulier de section circulaire, dont le diamètre est défini par rapport à un axe central identique au premier axe central A51 du premier orifice 51. En outre, la valeur du diamètre de la forme concave de l'excroissance 70 est strictement inférieure à la valeur du diamètre de la forme concave de la troisième surface S53.

Avantageusement, le boîtier 48 comprend au moins un corps 54 et une première pièce d'extrémité 55. La première pièce d'extrémité 55 est assemblée sur le corps 54. Le serre-câble 49 est assemblé sur la première pièce d'extrémité 55.

Ici, le deuxième orifice 52 est ménagé dans la première pièce d'extrémité 55 du boîtier 48.

Ainsi, le serre-câble 49 permet de régler une longueur du câble d'alimentation électrique 48 entre l'actionneur électromécanique 11 et la première pièce d'extrémité 55, en fonction d'une distance séparant l'actionneur électromécanique 11 et la première pièce d'extrémité 55.

Avantageusement, le serre-câble 49 comprend, en outre, au moins une première surface plane S49. Le boîtier 48, en particulier la première pièce d'extrémité 55, comprend une deuxième surface plane S55. En outre, dans la position plaquée du serre-câble 49 contre le boîtier 48, la première surface plane S49 est en appui contre la deuxième surface plane S55.

Avantageusement, le corps 54 comprend au moins une cavité 56. La cavité 56 est configurée pour loger, autrement dit loge, une partie du câble d'alimentation électrique 18.

Ainsi, la construction du dispositif d'alimentation en énergie électrique 31 permet de ranger une partie du câble d'alimentation électrique 18 à l'intérieur de la cavité 56 du corps 54 du boîtier 48, de sorte à limiter une longueur d'une partie du câble d'alimentation électrique 18 située à l'extérieur du boîtier 48, qui n'est pas nécessaire au raccordement électrique du câble d'alimentation électrique 18 à l'actionneur électromécanique 11.

De cette manière, le rangement d'une partie du câble d'alimentation électrique 18 à l'intérieur de la cavité 56 du corps 54 du boîtier 48 permet de s'affranchir d'un point d'ancrage du câble d'alimentation électrique 18 par rapport à une paroi du bâtiment B, notamment le mur M ou un plafond, si la longueur du câble d'alimentation électrique 18 entre la première pièce d'extrémité 55 et l'actionneur électromécanique 11 est inférieure ou égale à une valeur seuil de distance prédéterminée.

En outre, la construction du dispositif d'alimentation en énergie électrique 31 permet de cacher une partie du câble d'alimentation électrique 18 à l'intérieur de la cavité 56 du corps 54 du boîtier 48, de sorte à améliorer l'esthétique du dispositif d'alimentation en énergie électrique 31.

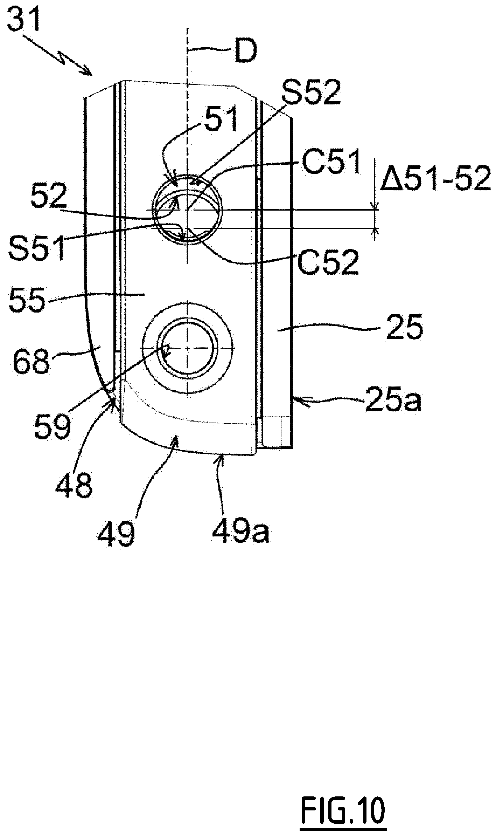

Ici et tel qu'illustré à la figure 10, le boîtier 48 comprend, en outre, un capot 68. Le capot 68 est monté, autrement dit est configuré pour être monté, sur le corps 54, en particulier dans une configuration assemblée du dispositif d'alimentation en énergie électrique 31. En outre, la cavité 56 du corps 54 est obturée, autrement dit est configurée pour être obturée, par le capot 68, en particulier dans la configuration assemblée du dispositif d'alimentation en énergie électrique 31.

Avantageusement, le corps 54 comprend, en outre, au moins un premier fût de vissage 57. La première pièce d'extrémité 55 comprend au moins un premier trou de passage 58. Le serre-câble 49 comprend au moins un deuxième trou de passage 59, dont on note A59 l'axe central. En outre, la première vis de fixation 50 est logée à l'intérieur des premiers et deuxième trous de passage 58, 59 et est vissée dans le premier fût de vissage 57, au moins dans la position plaquée du serre-câble 49 contre le boîtier 48.

Avantageusement, dans la position basculée du serre-câble 49 par rapport au boîtier 48, telle qu'illustré à la figure 7, la première vis de fixation 50 est partiellement dévissée par rapport au premier fût de vissage 57, tout en restant vissée dans le premier fût de vissage 57.

Autrement dit, dans la position basculée du serre-câble 49 par rapport au boîtier 48, le filetage de la première vis de fixation 50 est en prise avec le taraudage du premier fût de vissage 57.

Ainsi, dans la position basculée du serre-câble 49 par rapport au boîtier 48, la première vis de fixation 50 n'est pas complètement dévissée, de sorte que le serre-câble 49 est retenu par rapport au boîtier 48.

De cette manière, dans la position basculée du serre-câble 49 par rapport au boîtier 48, le serre-câble 49 reste assemblé avec le boîtier 48.

En outre, le dévissage incomplet de la première vis de fixation 50 dans la position basculée du serre-câble 49 par rapport au boîtier 48 permet, d'une part, d'empêcher le retrait d'un des organes du dispositif d'alimentation en énergie électrique 31 et, d'autre part, de garder le serre-câble 49 maintenu sur le boîtier 48.

Avantageusement, le deuxième trou de passage 59 du serre-câble 49 est ménagé à proximité du premier orifice 51 du serre-câble 49.

Ainsi, la faible distance entre le deuxième trou de passage 59 et le premier orifice 51 du serre-câble 49 permet de garantir un effort minimum de maintien en position du câble d'alimentation électrique 18 par rapport au boîtier 48.

Avantageusement, le serre-câble 49 présente une première extrémité 49a et une deuxième extrémité 49b. La deuxième extrémité 49b est opposée à la première extrémité 49a.

Avantageusement, le deuxième de trou passage 59 est ménagé à proximité de la première extrémité 49a du serre-câble 49.

Avantageusement, la première pièce d'extrémité 55 comprend au moins un ergot 60. Le serre-câble 49 comprend, en outre, au moins une cavité 61. En outre, l'ergot 60 est logé à l'intérieur de la cavité 61, dans la position plaquée du serre-câble 49 contre le boîtier 48 et dans la position basculée du serre-câble 49 par rapport au boîtier 48.

Ainsi, le serre-câble 49 est configuré pour être déplacé, autrement dit est déplacé, par rapport à la première pièce d'extrémité 55, lorsque la première vis de fixation 50 est dévissée, en particulier par rapport au premier fût de vissage 57 ménagé dans le corps 54 du boîtier 48, de la position plaquée à la position basculée par un mouvement, en particulier de rotation, de la cavité 61 autour de l'ergot 60.

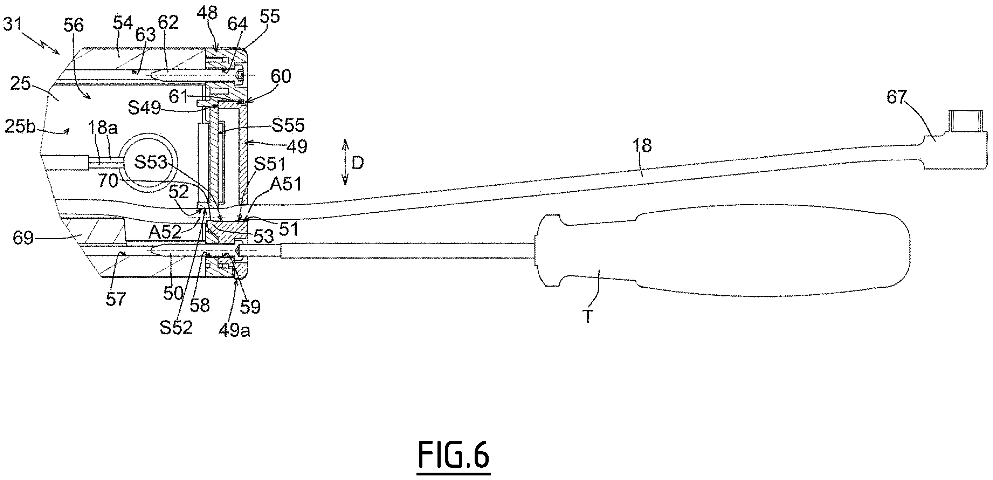

Ici et tel qu'illustré aux figures 6 à 9 et 11, la cavité 61 de la première pièce d'extrémité 55 est réalisée sous la forme d'un épaulement.

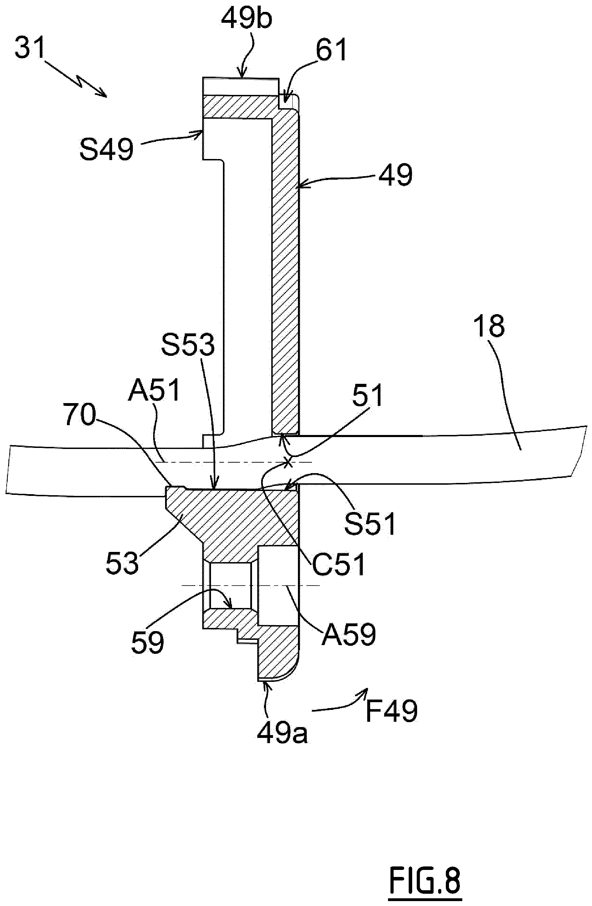

Avantageusement, le mouvement du serre-câble 49 par rapport à la première pièce d'extrémité 55 est mis en oeuvre par un doigt de l'installateur, en exerçant une traction sur le serre-câble 49, en particulier dans le sens de la flèche F49 à la figure 8 au niveau de la première extrémité 49a de celui-ci.

Avantageusement, la cavité 61 du serre-câble 49 est ménagée à proximité de la deuxième extrémité 49b du serre-câble 49.

Avantageusement, la première pièce d'extrémité 55 est fixée sur le corps 54 du boîtier 48, au moyen d'une deuxième vis de fixation 62.

Avantageusement, le corps 54 du boîtier 48 comprend, en outre, au moins un deuxième fût de vissage 63. La première pièce d'extrémité 55 comprend, en outre, au moins un troisième trou de passage 64, dont on note A64 l'axe central. En outre, la deuxième vis de fixation 62 est logée à l'intérieur du troisième trou de passage 64 et est vissée dans le deuxième fût de vissage 63.

Avantageusement, la deuxième vis de fixation 62 est identique à la première vis de fixation 50.

Avantageusement, le boîtier 48 comprend, en outre, une deuxième pièce d'extrémité 65.

Chacune des première et deuxième pièces d'extrémité 55, 65 peut également être appelée un embout.

Avantageusement, la première pièce d'extrémité 55 est réalisée dans une matière plastique. En outre, la deuxième pièce d'extrémité 65 est également réalisée dans une matière plastique.

Avantageusement, la deuxième pièce d'extrémité 65 est également fixée sur le corps 54 du boîtier 48, en particulier au moyen de deux autres vis de fixation 66.

Avantageusement, les deux autres vis de fixation 66 sont identiques aux première et deuxième vis de fixation 50, 62.

Avantageusement, le vissage et le dévissage de la première vis de fixation 50, de la deuxième vis de fixation 62, ainsi que des autres vis de fixation 66, est mis en oeuvre au moyen d'un outil, tel que, par exemple, un tournevis T.

Ici, le corps 54 du boîtier 48 est un profilé.

Avantageusement, le corps 54 du boîtier 48 est réalisé dans une matière métallique, pouvant être, par exemple, de l'aluminium.

Grâce à la présente invention, la construction du dispositif d'alimentation en énergie électrique 31 permet de régler une longueur du câble d'alimentation électrique de part et d'autre du serre-câble, puis de maintenir en position, autrement dit de bloquer, le câble d'alimentation électrique par rapport au boîtier.

De nombreuses modifications peuvent être apportées aux exemples de réalisation décrits précédemment, sans sortir du cadre de l'invention défini par les revendications.

En variante, non représentée, la première pièce d'extrémité 55 est fixée sur le corps 54 du boîtier 48 au moyen d'éléments de fixation par encliquetage élastique. En outre, la deuxième pièce d'extrémité 65 est également fixée sur le corps 54 du boîtier 48 au moyen d'éléments de fixation par encliquetage élastique.

En variante, non représentée, le corps 54 et la première pièce d'extrémité 55 ne forment qu'une unique pièce. En outre, la deuxième pièce d'extrémité 65 fait également partie de l'unique pièce formée par le corps 54 et la première pièce d'extrémité 55. Autrement dit, l'unique pièce est une pièce monobloc.

En variante, non représentée, la première valeur de diamètre intérieur QJ51 du premier orifice 51 est différente de la deuxième valeur de diamètre intérieur QJ52 du deuxième orifice 52.

En variante, non représentée, le premier orifice 51, le deuxième orifice 52 et le câble d'alimentation électrique 18 sont respectivement de sections rectangulaires. Autrement dit, le câble d'alimentation électrique 18 est appelé un câble d'alimentation électrique plat. Dans ce cas, le premier orifice 51 présente une première valeur de hauteur, le deuxième orifice 52 présente une deuxième valeur de hauteur et le câble d'alimentation électrique 18 présente une troisième valeur d'épaisseur. La troisième valeur d'épaisseur du câble d'alimentation électrique 18 est inférieure ou égale à la première valeur de hauteur du premier orifice 51 et à la deuxième valeur de hauteur du deuxième orifice 52. Ainsi, le maintien en position du câble d'alimentation électrique 18 dans la position plaquée, obtenu par le décalage des premier et deuxième centres géométriques C51, C52 des premier et deuxième orifices 51, 52, selon la direction axiale D, est compatible avec la troisième valeur d'épaisseur du câble d'alimentation électrique 18 comprise dans une plage de valeurs définie par une valeur minimale et par une valeur maximale.

En variante, non représentée, le corps 54 du boîtier 48 est réalisé dans une matière plastique.

En variante, non représentée, dans le cas où le panneau photovoltaïque 25 est fixé sur le boîtier 48, la liaison électrique entre le câble d'alimentation électrique 18 et le panneau photovoltaïque 25 est mise en oeuvre par l'assemblage d'un connecteur électrique du câble d'alimentation électrique 18 sur un autre connecteur électrique du panneau photovoltaïque 25.

En variante, non représentée, la charge électrique est un dispositif d'éclairage.

En variante, non représentée, dans la position basculée du serre-câble 49 par rapport au boîtier 48, la première vis de fixation 50 est totalement dévissée, par rapport premier fût de vissage 57.

En variante, non représentée, l'unité électronique de contrôle 15 comprend, en outre, un boîtier. En outre, la première carte électronique 15a est disposée à l'intérieur du boîtier, en particulier dans une configuration assemblée de l'unité électronique de contrôle 15. Ainsi, le boîtier de l'unité électronique de contrôle 15 permet de protéger la première carte électronique 15a, lors de l'assemblage de l'actionneur électromécanique 11 et suite à l'assemblage de ce dernier. De cette manière, le boîtier de l'unité électronique de contrôle 15 permet d'isoler électriquement la première carte électronique 15a par rapport au carter 17. Avantageusement, le diamètre extérieur du boîtier de l'unité électronique de contrôle 15 est inférieur au diamètre intérieur du carter 17, de sorte que le boîtier peut être inséré dans le carter 17, lors de l'assemblage de l'actionneur électromécanique 11. Dans un premier cas, le boîtier de l'unité électronique de contrôle 15 peut comprendre deux demi-coques configurées pour coopérer ensemble, en particulier dans la configuration assemblée de l'unité électronique de contrôle 15. Dans la configuration assemblée de l'actionneur électromécanique 11, les deux demi-coques sont assemblées entre elles, de sorte à définir un plan de jonction s'étendant suivant une direction parallèle à l'axe de rotation X. Avantageusement, au moins l'une des deux demi-coques formant le boîtier comprend des éléments de positionnement et de fixation de la première carte électronique 15a, en particulier dans la configuration assemblée de l'unité électronique de contrôle 15. Dans un deuxième cas, le boîtier de l'unité électronique de contrôle 15 peut comprendre un ou plusieurs tronçons, le ou chaque tronçon étant réalisé sous la forme d'un tube creux. Le ou chaque tronçon est configuré pour loger ou recevoir, autrement dit loge ou reçoit, la première carte électronique 15a, en particulier dans la configuration assemblée de l'unité électronique de contrôle 15. Dans un tel cas, le ou chaque tronçon du boîtier comprend une première rainure et une deuxième rainure. En outre, les première et deuxième rainures sont configurées pour maintenir en position, autrement dit maintiennent en position, la première carte électronique 15a à l'intérieur du boîtier, en particulier dans la configuration assemblée de l'unité électronique de contrôle 15.

En variante, non représentée, le dispositif d'alimentation en énergie électrique 31 comprend, en outre, un chargeur. Le chargeur est configuré pour être relié électriquement, autrement dit est relié électriquement, à la batterie 46, soit directement, soit au travers de l'actionneur électromécanique 11 et/ou de l'unité électronique de contrôle 15. Le chargeur est configuré pour être branché, autrement dit est branché, sur une prise électrique murale, de sorte à recharger la batterie 46 à partir d'un réseau d'alimentation électrique du secteur. Ce chargeur forme une source d'alimentation en énergie électrique externe.

En variante, non représentée, le dispositif d'alimentation en énergie électrique 31 comprend, en outre, une batterie auxiliaire, la batterie auxiliaire étant configurée pour recharger la batterie 46. La batterie auxiliaire est configurée pour être reliée électriquement, autrement dit est reliée électriquement, à la batterie 46, soit directement, soit au travers de l'actionneur électromécanique 11 et/ou de l'unité électronique de contrôle 15. Ainsi, la batterie 46 peut être rechargée au moyen de la batterie auxiliaire formant une source d'alimentation en énergie électrique externe, en particulier dans le cas où le dispositif d'occultation 3 est éloigné d'une prise électrique murale. En outre, la batterie auxiliaire peut permettre de recharger une batterie d'autres équipements électriques, notamment nomades, tels que, par exemple, un téléphone portable ou un ordinateur portable.

En variante, non représentée, l'actionneur électromécanique 11 est inséré dans un rail, en particulier de section carrée ou rectangulaire, pouvant être ouvert à l'une ou à ses deux extrémités, en particulier dans la configuration assemblée du dispositif d'occultation 3. Par ailleurs, l'actionneur électromécanique 11 peut être configuré pour entraîner au moins un arbre d'entraînement sur lequel s'enroule des cordons de déplacement et/ou d'orientation de l'écran 2, qui peut, avantageusement, être un store à lames dans ce cas. Dans ce cas, le dispositif d'occultation 3 comprend une barre mobile ou une pluralité de barres mobiles, qui peuvent être toutes déplacées au moyen de l'actionneur électromécanique 11.

En outre, les modes de réalisation et variantes envisagés peuvent être combinés pour générer de nouveaux modes de réalisation de l'invention, sans sortir du cadre de l'invention défini par les revendications.

## Revendications

1. Dispositif d'alimentation en énergie électrique (31),
le dispositif d'alimentation en énergie électrique (31) comprenant au moins :
- un boîtier (48),
- un câble d'alimentation électrique (18), et
- un serre-câble (49), le serre-câble (49) coopérant avec le câble d'alimentation électrique (18), le serre-câble (49) étant solidaire du boîtier (48), au moyen d'une première vis de fixation (50),
le serre-câble (49) comprenant au moins un premier orifice (51) de passage du câble d'alimentation électrique (18), le premier orifice (51) présentant un premier centre géométrique (C51),
le boîtier (48) comprenant au moins un deuxième orifice (52) de passage du câble d'alimentation électrique (18), le deuxième orifice (52) présentant un deuxième centre géométrique (C52),
**caractérisé**
**en ce que**, dans une position plaquée du serre-câble (49) contre le boîtier (48), dans laquelle la première vis de fixation (50) est vissée pour maintenir en appui le serre-câble (49) contre le boîtier (48), le premier centre géométrique (C51) du premier orifice (51) est décalé par rapport au deuxième centre géométrique (C52) du deuxième orifice (52), selon une direction axiale (D) passant par les premier et deuxième centres géométriques (C51, C52), de sorte que le câble d'alimentation électrique (18) est maintenu en position par coincement au moyen d'au moins une partie d'une première surface périphérique (S51) du premier orifice de passage (51) et d'au moins une partie d'une deuxième surface périphérique (S52) du deuxième orifice de passage (52),
et **en ce que**, dans une position basculée du serre-câble (49) par rapport au boîtier (48), dans laquelle la première vis de fixation (50) est au moins partiellement dévissée, le câble d'alimentation électrique (18) est libéré par rapport au serre-câble (49) et au boîtier (48), de sorte à pouvoir coulisser le câble d'alimentation électrique (18) au travers des premier et deuxième orifices (51, 52).

2. Dispositif d'alimentation en énergie électrique (31) selon la revendication 1, **caractérisé**
**en ce que** le serre-câble (49) comprend, en outre, un élément en saillie (53), l'élément en saillie (53) s'étendant le long d'une portion de la circonférence du premier orifice (51),
et **en ce que**, dans la position plaquée du serre-câble (49) contre le boîtier (48), une partie de l'élément en saillie (53) est disposée à l'intérieur du deuxième orifice (52).

3. Dispositif d'alimentation en énergie électrique (31) selon la revendication 1 ou selon la revendication 2, **caractérisé**
**en ce que** le boîtier (48) comprend au moins :
- un corps (54), et
- une première pièce d'extrémité (55), la première pièce d'extrémité (55) étant assemblée sur le corps (54) ou étant monobloc avec le corps (54),
**en ce que** le serre-câble (49) est assemblé sur la première pièce d'extrémité (55), et en ce que le corps (54) comprend au moins une cavité (56), la cavité (56) logeant une partie du câble d'alimentation électrique (18).

4. Dispositif d'alimentation en énergie électrique (31) selon la revendication 3, **caractérisé**
**en ce que** le corps (54) comprend, en outre, au moins un premier fût de vissage (57), en ce que la première pièce d'extrémité (55) comprend au moins un premier trou de passage (58),
**en ce que** le serre-câble (49) comprend au moins un deuxième trou de passage (59), et en ce que la première vis de fixation (50) est logée à l'intérieur des premiers et deuxième trous de passage (58, 59) et est vissée dans le premier fût de vissage (57), au moins dans la position plaquée du serre-câble (49) contre le boîtier (48).

5. Dispositif d'alimentation en énergie électrique (31) selon la revendication 4, **caractérisé en ce que**, dans la position basculée du serre-câble (49) par rapport au boîtier (48), la première vis de fixation (50) est partiellement dévissée par rapport au premier fût de vissage (57), tout en restant vissée dans le premier fût de vissage (57).

6. Dispositif d'alimentation en énergie électrique (31) selon l'une quelconque des revendications 3 à 5, **caractérisé**
**en ce que** la première pièce d'extrémité (55) comprend au moins un ergot (60),
**en ce que** le serre-câble (49) comprend, en outre, au moins une cavité (61),
et **en ce que** ! ergot (60) est logé à l'intérieur de la cavité (61), dans la position plaquée du serre-câble (49) contre le boîtier (48) et dans la position basculée du serre-câble (49) par rapport au boîtier (48).

7. Dispositif d'alimentation en énergie électrique (31) selon l'une quelconque des revendications 3 à 6, **caractérisé en ce que** la première pièce d'extrémité (55) est fixée sur le corps (54) du boîtier (48), au moyen d'une deuxième vis de fixation (62).

8. Dispositif d'entraînement motorisé (5),
le dispositif d'entraînement motorisé (5) comprenant au moins :
- un actionneur électromécanique (11),
- une unité électronique de contrôle (15), et
- un dispositif d'alimentation en énergie électrique (31),
l'actionneur électromécanique (11) comprenant au moins un moteur électrique (16), **caractérisé**
**en ce que** le dispositif d'alimentation en énergie électrique (31) est conforme à l'une quelconque des revendications 1 à 7,
**en ce que** le dispositif d'alimentation en énergie électrique (31) comprend, en outre, une batterie (46),
et **en ce que** l'unité électronique de contrôle (15) et le moteur électrique (16) sont alimentés en énergie électrique à partir de la batterie (46).

9. Dispositif d'entraînement motorisé (5) selon la revendication 8, **caractérisé en ce que** le dispositif d'alimentation en énergie électrique (31) comprend, en outre, au moins un panneau photovoltaïque (25), le panneau photovoltaïque (25) étant fixé sur le boîtier (48), la batterie (46) étant alimentée en énergie électrique au moyen du panneau photovoltaïque (25).

10. Dispositif d'occultation (3),
le dispositif d'occultation (3) comprenant au moins :
- un écran (2), et
- un dispositif d'entraînement motorisé (5),
**caractérisé en ce que** le dispositif d'entraînement motorisé (5) est conforme à la revendication 8 ou à la revendication 9, l'écran (2) étant configuré pour être entraîné en déplacement par l'actionneur électromécanique (11) du dispositif d'entraînement motorisé (5).
